# EUROPÄISCHE PATENTSCHRIFT

(11) **EP 2 762 341 B1**
(45) Veröffentlichungstag und Bekanntmachung des Hinweises auf die Patenterteilung: **28.09.2016**
(21) Anmeldenummer: 14166287.4
(22) Anmeldetag: 01.02.2012
(51) Int. Cl.: B60K 6/48, B60K 6/547, B60K 6/387, F16H 3/00, B60K 6/54

(54) **Schaltgetriebe eines Hybridantriebs für ein Kraftfahrzeug**
Manual shift transmission of a hybrid drive for a motor vehicle
Engrenage d'un entraînement hybride pour un véhicule automobile

(30) Priorität: 15.03.2011 DE 102011005561
(43) Veröffentlichungstag der Anmeldung: 06.08.2014
(62) Teilanmeldung aus: 12702804.1
(73) Patentinhaber: ZF Friedrichshafen AG, 88046 Friedrichshafen (DE)
(72) Erfinder: Kaltenbach, Johannes, 88048 Friedrichshafen (DE)

(56) Entgegenhaltungen:
- EP-A1- 1 610 038
- DE-A1-102004 022 414
- FR-A1- 2 811 395
- JP-A- 2010 203 605
- US-A1- 2006 130 601
- TENBERGE P: "Double-Clutch Transmission - Power-Shiftable Winding Transmission", VDI BERICHTE, DUESSELDORF, DE, Bd. 1665, 13. März 2002 (2002-03-13), Seiten 1033-1050, XP009094673, ISSN: 0083-5560

## Beschreibung

Die Erfindung betrifft ein Schaltgetriebe eines Hybridantriebs für ein Kraftfahrzeug, mit zwei Eingangswellen und einer gemeinsamen Ausgangswelle, wobei die erste Eingangswelle mit der Triebwelle eines Verbrennungsmotors verbindbar und über eine erste Gruppe selektiv schaltbarer Gangradsätze mit der Ausgangswelle in Triebverbindung bringbar ist, wobei die zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, und wobei beide Eingangswellen über eine schaltbare Koppelvorrichtung miteinander in Triebverbindung bringbar sind.

Ein derartiges Schaltgetriebe weist einen verbrennungsmotorischen Kraftübertragungszweig und einen elektromotorischen Kraftübertragungszweig auf, die an der Ausgangswelle zusammengeführt sind. Der verbrennungsmotorische Kraftübertragungszweig umfasst die erste Eingängswelle, die Gangradsätze der ersten Gruppe sowie die Ausgangswelle und ermöglicht die Übertragung eines Drehmomentes zwischen dem Verbrennungsmotor und den mit der Ausgangswelle in Triebverbindung stehenden Antriebsrädern des Kraftfahrzeugs. Der elektromotorische Kraftübertragungszweig umfasst die zweite Eingangswelle, die Gangradsätze der zweiten Gruppe sowie die Ausgangswelle und ermöglicht die Übertragung eines Drehmomentes zwischen der Elektromaschine und den Antriebsrädern des Kraftfahrzeugs. Bei offener Koppelvorrichtung ist somit über einen geschalteten Gangradsatz der ersten Gruppe ein rein verbrennungsmotorischer Fahrbetrieb, über einen geschalteten Gangradsatz der zweiten Gruppe ein rein elektromotorischer Fahrbetrieb, sowie über jeweils einen geschalteten Gangradsatz der ersten und zweiten Gruppe ein Kombinationsfahrbetrieb beider Aggregate (Verbrennungsmotor und Elektromaschine) mit einem motorischen oder generatorischen Betrieb der Elektromaschine und mit fester Übersetzung möglich.

Durch das Schließen der Koppelvorrichtung kann der Verbrennungsmotor bei stehendem Kraftfahrzeug mittels der Elektromaschine gestartet werden. Zudem werden durch das Schließen der Koppelvorrichtung die Gangradsätze der zweiten Gruppe für den verbrennungsmotorischen Fahrbetrieb und die Gangradsätze der ersten Gruppe für den elektromotorischen Fahrbetrieb verfügbar gemacht. Bei entsprechender Übersetzung und Zuordnung der Gangradsätze werden somit insgesamt weniger Gangradsätze benötigt, und das Schaltgetriebe kann entsprechend einfacher sowie kompakter ausgeführt werden.

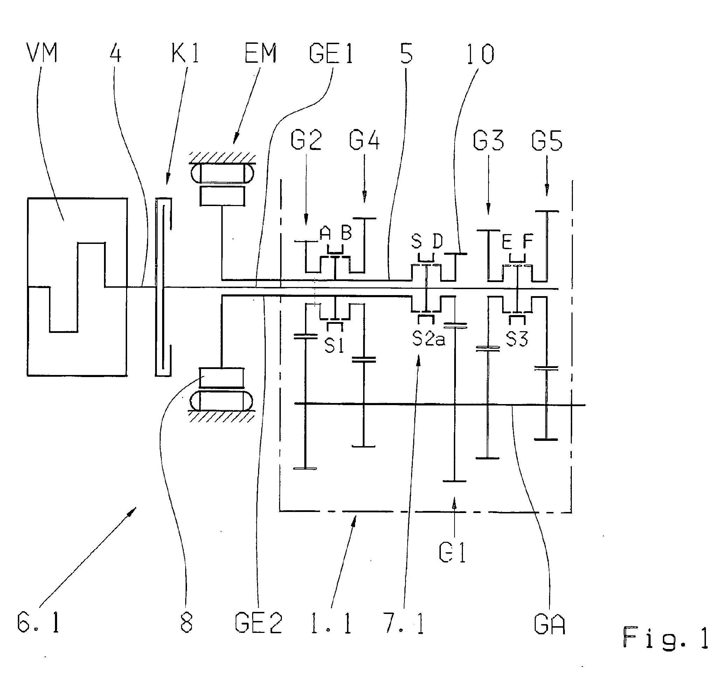

In der DE 199 60 621 B4 ist ein derartiges Schaltgetriebe in drei Ausführungsvarianten beschrieben. In allen Ausführungsformen weist der verbrennungsmotorische Kraftübertragungszweig eine erste Vorgelegewelle auf, die eingangsseitig über eine Eingangskonstante, eine erste Eingangswelle und eine Reibungskupplung mit der Triebwelle eines Verbrennungsmotors sowie ausgangsseitig über eine erste Gruppe selektiv schaltbarer Gangradsätze mit einer Ausgangswelle in Triebverbindung bringbar ist. In der ersten Ausführungsform nach der dortigen Fig. 1 ist eine zweite Eingangswelle als eine zweite Vorgelegewelle ausgebildet, die drehfest mit dem Rotor einer Elektromaschine verbunden und über eine zweite Gruppe selektiv schaltbarer Gangradsätze mit der Ausgangswelle in Triebverbindung bringbar ist. Die Koppelvorrichtung besteht in diesem Fall aus einer zwischen der ersten Eingangswelle und der zweiten Vorgelegewelle angeordneten Triebstufe sowie einer schaltbaren Kupplung, die zwischen dem vorgelegeseitigen Triebrad der Triebstufe und der zweiten Vorgelegewelle angeordnet ist.

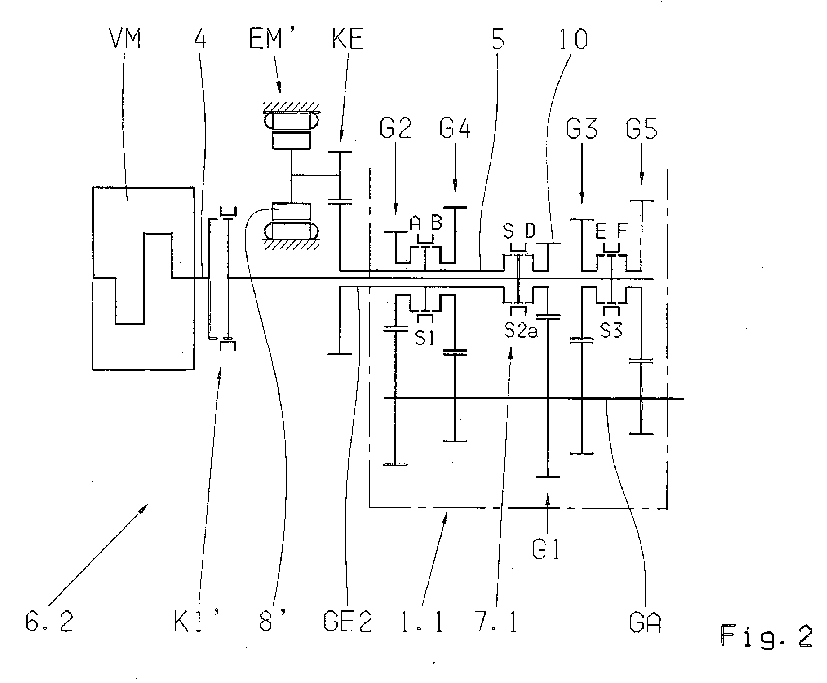

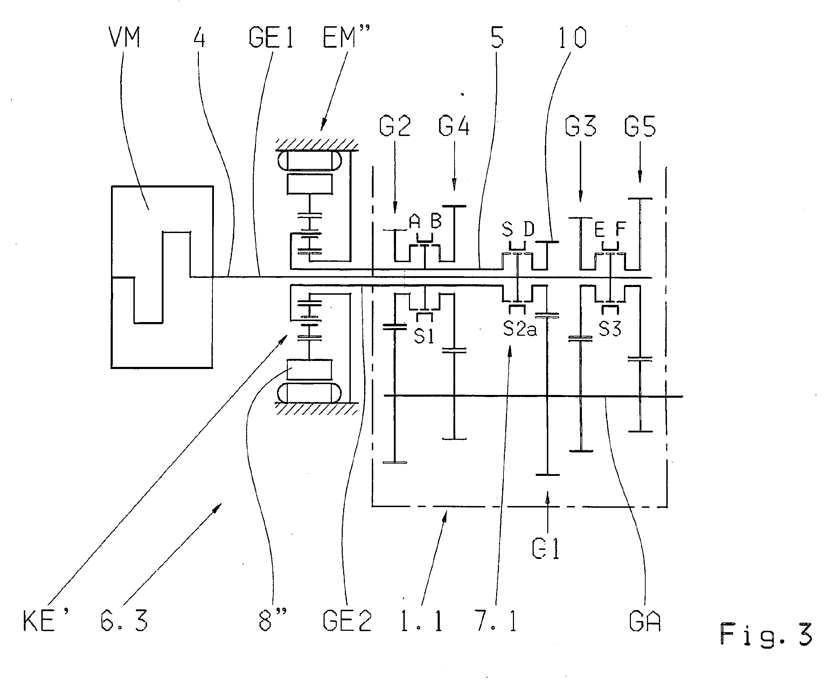

In der zweiten und dritten Ausführungsform nach den dortigen Figuren 2 und 3 ist die zweite Eingangswelle als eine hohle Rotorwelle ausgebildet, die koaxial über der ersten Eingangswelle angeordnet und drehfest mit dem Rotor einer koaxial über der ersten Eingangswelle angeordneten Elektromaschine verbunden ist. Die Rotorwelle steht über eine zweite Eingangskonstante mit der zweiten Vorgelegewelle in Triebverbindung, die über die zweite Gruppe selektiv schaltbarer Gangradsätze mit der Ausgangswelle in Triebverbindung bringbar ist. Die Koppelvorrichtung besteht in diesem Fall aus einer schaltbaren Kupplung, die zwischen der ersten Eingangswelle und der Rotorwelle angeordnet ist.

Bei einem weiteren derartigen Schaltgetriebe nach der WO 2008/138 387 A1 sind beide Eingangswellen als Vorgelegewellen ausgebildet. Die erste Eingangs- bzw. Vorgelegewelle des verbrennungsmotorischen Kraftübertragungszweiges ist eingangsseitig über eine steuerbare Trennkupplung mit der Triebwelle eines Verbrennungsmotors verbindbar und ausgangsseitig über eine erste Gruppe selektiv schaltbarer Gangradsätze mit einer Ausgangswelle in Triebverbindung bringbar. Die zweite Eingangs- bzw. Vorgelegewelle des elektromotorischen Kraftübertragungszweiges ist eingangsseitig drehfest mit dem Rotor einer Elektromaschine verbunden und ausgangsseitig über eine zweite Gruppe selektiv schaltbarer Gangradsätze mit der Ausgangswelle in Triebverbindung bringbar. Die Gangradsätze beider Gruppen sind in gemeinsamen Radialebenen angeordnet und nutzen jeweils ein gemeinsames, auf der Ausgangswelle angeordnetes Abtriebsrad. Die Koppelvorrichtung ist in diesem Fall dadurch gebildet, dass die Losräder und die zugeordneten, in einem Schaltpaket zusammengefassten Gangkupplungen von zwei axial benachbarten Gangradsätzen der zweiten Gruppe an der Ausgangswelle angeordnet sind, wodurch die Kopplung beider Eingangswellen unabhängig von der Schaltung eines der betreffenden Gangradsätze möglich ist.

Aus der gattungsbildenden FR 2811395 A1 ist ein Schaltgetriebe eines Hybridantriebs für ein Kraftfahrzeug bekannt, welcher zwei koaxial verlaufende Eingangswellen und eine gemeinsame Ausgangswelle aufweist, wobei die erste dieser Eingangswellen mit einem Verbrennungsmotor oder einem Elektromotor in Verbindung gebracht werden kann und über eine erste Gruppe selektiv schaltbarer Gangradsätze mit der Ausgangswelle in Triebverbindung gebracht werden kann. Die zweite Eingangswelle ist als Hohlwelle ausgeformt, ist mit einer Elektromaschine verbunden und kann über eine zweite Gruppe selektiv schaltbarer Gangradsätze mit der Ausgangswelle in Triebverbindung gebracht werden. Diese Elektromaschine ist sowohl als Elektromotor als auch als Generator betreibbar. Beide Eingangswellen können über eine Koppelvorrichtung miteinander in Triebverbindung gebracht werden. Das beschriebene Schaltgetriebe ist aus einem Doppelkupplungsgetriebe mit zwei koaxial verlaufenden Eingangswellen abgeleitet. Die Koppelvorrichtung umfasst eine schaltbare Kupplung, die der ersten Eingangswelle zugeordnet und axial benachbart zu dem getriebeseitigen Ende der Ausgangswelle angeordnet.

Die bekannten Schaltgetriebe sind speziell für den Einsatz in einem Hybridantrieb eines Kraftfahrzeugs ausgelegt und somit vergleichsweise aufwendig sowie teuer herstellbar. Der Markterfolg von hybridangetriebenen Kraftfahrzeugen hängt aber wesentlich von günstigen Herstellungskosten der Baugruppen des Hybridantriebsstrangs, insbesondere auch des Schaltgetriebes ab.

Der vorliegenden Erfindung liegt daher die Aufgabe zugrunde, ein Schaltgetriebe eines Hybridantriebs der eingangs genannten Art vorzuschlagen, das ohne wesentliche Funktionseinschränkungen besonders kostengünstig herstellbar ist.

Eine erfindungsgemäße Lösung der gestellten Aufgabe besteht in Anspruch 1.

Vorteilhafte Ausgestaltungen und Weiterbildungen dieses Schaltgetriebes sind Gegenstand der Unteransprüche 2 bis 17.

Demnach betrifft die Erfindung gemäß der Lösung der gestellten Aufgabe ein Schaltgetriebe eines Hybridantriebs für ein Kraftfahrzeug, mit zwei Eingangswellen und einer gemeinsamen Ausgangswelle, wobei die erste Eingangswelle mit der Triebwelle eines Verbrennungsmotors verbindbar und über eine erste Gruppe selektiv schaltbarer Gangradsätze mit der Ausgangswelle in Triebverbindung bringbar ist, wobei die zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, und wobei beide Eingangswellen über eine schaltbare Koppelvorrichtung miteinander in Triebverbindung bringbar sind.

Zur kostengünstigen Herstellung eines derartigen Schaltgetriebes ist vorgesehen, dass das Schaltgetriebe aus einem Doppelkupplungsgetriebe mit zwei koaxialen Eingangswellen abgeleitet ist, dessen erste Eingangswelle zentral angeordnet ist, dessen zweite Eingangswelle als eine Hohlwelle ausgebildet und koaxial über der ersten Eingangswelle angeordnet ist, und dessen Koppelvorrichtung eine Getriebestufe und/oder eine schaltbare Kupplung umfasst, die anstelle desjenigen Gangradsatzes und seiner zugeordneten Gangkupplung vorgesehen sind, der in dem zu Grunde liegenden Doppelkupplungsgetriebe der zweiten Eingangswelle zugeordnet und an dem getriebeseitigen Ende der zweiten Eingangswelle angeordnet ist.

Dieses Schaltgetriebe eines Hybridantriebs ist weitgehend identisch mit dem zugrunde liegenden Doppelkupplungsgetriebe, weist eine hohe Zahl von Gleichteilen mit diesem auf, und ist daher, z.B. in einer gemeinsamen Produktionslinie mit dem Doppelkupplungsgetriebe, kostengünstig herstellbar.

Zur Vermeidung von Funktionseinschränkungen des Schaltgetriebes bzw. des betreffenden Hybridantriebs ist der in dem zugrunde liegenden Doppelkupplungsgetriebe an dem getriebeseitigen Ende der zweiten Eingangswelle angeordnete und in dem Schaltgetriebe des Hybridantriebs durch die Koppelvorrichtung ersetzte Gangradsatz ebenfalls bevorzugt als ein Umkehr-Gangradsatz ausgebildet und dem Rückwärtsgang zugeordnet, da in dem Schaltgetriebe des Hybridantriebs aufgrund der umkehrbaren Drehrichtung der Elektromaschine problemlos auf einen Rückwärtsgang verzichtet werden kann.

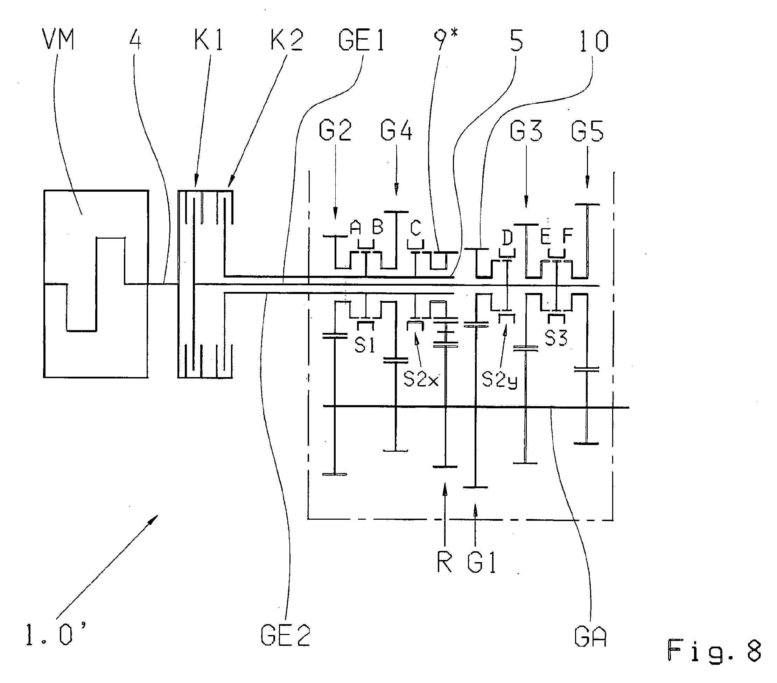

Wenn gemäß der Lösung der gestellten Aufgabe bei dem zu Grunde liegenden Doppelkupplungsgetriebe (entsprechend Fig. 8) die Gangradsätze (G1 - G5, R) jeweils unmittelbar zwischen einer der beiden Eingangswellen GE1, GE2 und der Ausgangswelle GA angeordnet sind, und zumindest das Losrad und die zugeordnete Gangkupplung C des der zweiten Eingangswelle GE2 zugeordneten und an dem getriebeseitigen Ende der zweiten Eingangswelle GE2 angeordneten Gangradsatzes R auf der zweiten Eingangswelle GE2 angeordnet sind, kann die Koppelvorrichtung nur eine Schaltkupplung S zur unmittelbaren Kopplung des getriebeseitigen Endes der zweiten Eingangswelle GE2 mit der ersten Eingangswelle GE1 umfassen.

Wenn in dem zugrunde liegenden Doppelkupplungsgetriebe (entsprechend Fig. 8) das Losrad und die zugeordnete Gangkupplung D des der ersten Eingangswelle GE1 zugeordneten, zu dem getriebeseitigen Ende der zweiten Eingangswelle GE2 axial benachbarten Gangradsatzes G1 auf der ersten Eingangswelle GE1 angeordnet sind, ist die Schaltkupplung S der Koppelvorrichtung zur Vereinfachung der Betätigungsvorrichtung bevorzugt mit der Gangkupplung D dieses Gangradsatzes G1 in einem gemeinsamen Schaltpaket S2a zusammengefasst, über das die erste Eingangswelle GE1 in einer ersten Schaltstellung drehfest mit der zweiten Eingangswelle GE2 gekoppelt ist, in einer Neutralstellung ungekoppelt ist, und in einer zweiten Schaltstellung drehfest mit dem Losrad des betreffenden Gangradsatzes G1 gekoppelt ist.

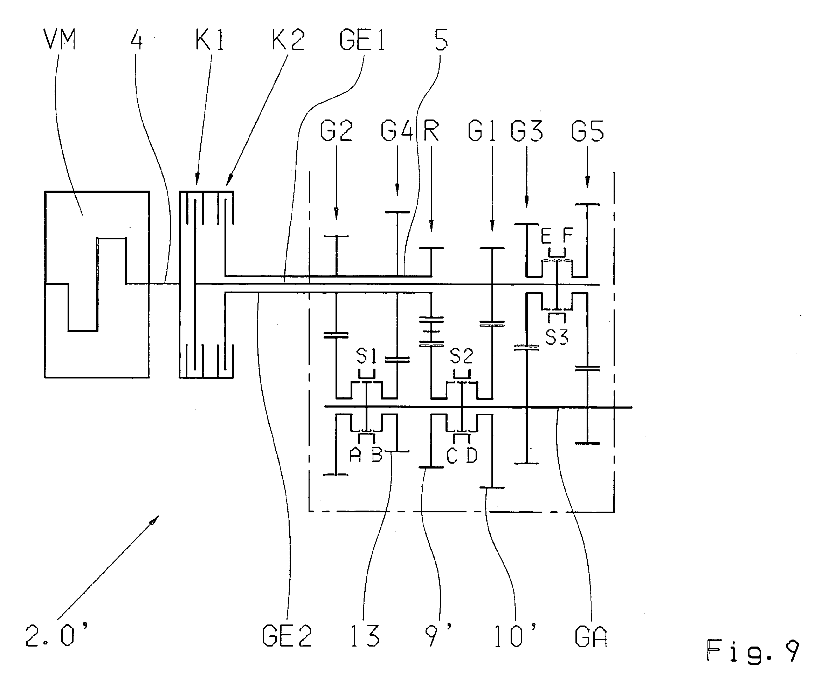

Wenn in dem zugrunde liegenden Doppelkupplungsgetriebe (entsprechend Fig. 9) die Gangradsätze (G1 - G5, R) jeweils unmittelbar zwischen einer der beiden Eingangswellen GE1, GE2 und der Ausgangswelle GA angeordnet sind, und zumindest die Losräder und die zugeordneten Gangkupplungen C, D des der ersten Eingangswelle GE1 zugeordneten und axial benachbart zu dem getriebeseitigen Ende der zweiten Eingangswelle GE2 angeordneten getriebeinneren Gangradsatzes G1 sowie des der zweiten Eingangswelle GE2 zugeordneten und an dem getriebeseitigen Ende der zweiten Eingangswelle GE2 angeordneten Gangradsatzes R auf der Ausgangswelle GA angeordnet sind, umfasst die Koppelvorrichtung eine Getriebestufe GK, die aus einem auf der Ausgangswelle GA drehbar gelagerten Losrad und einem an dem getriebeseitigen Ende der zweiten Ausgangswelle GE2 drehfest angeordneten Festrad besteht, und eine Schaltkupplung T zur Kopplung des Losrades des getriebeinneren Gangradsatzes G1 mit dem Losrad der Getriebestufe GK.

Die Übersetzung i_{GK} der Getriebestufe GK entspricht bevorzugt der Übersetzung i_{G1} des über die Schaltkupplung T der Koppelvorrichtung koppelbaren Gangradsatzes G1 (i_{GK} = i_{G1}), da die wirksame Koppelübersetzung i_{K} zwischen der ersten Eingangswelle GE1 und der zweiten Eingangswelle GE2 bei geschlossener Schaltkupplung T dann gleich eins ist (i_{K} = i_{G1} / i_{GK} = 1).

Wenn in dem zugrunde liegenden Doppelkupplungsgetriebe (entsprechend Fig. 9) neben den zuvor genannten Merkmalen auch das Losrad und die Gangkupplung B des der zweiten Eingangswelle GE2 zugeordneten und axial benachbart zu dem äußeren Gangradsatz R an dem getriebeseitigen Ende der zweiten Eingangswelle GE2 angeordneten Gangradsatzes G4 auf der Ausgangswelle GA angeordnet sind, kann die Koppelvorrichtung alternativ auch den verbliebenen Gangradsatz (G4) der beiden der zweiten Eingangswelle GE2 zugeordneten Gangradsätze G4, R und eine Schaltkupplung U zur Kopplung des Losrades des getriebeinneren Gangradsatzes G1 mit dem Losrad des verbliebenen Gangradsatzes G4 umfassen. Dem Vorteil der Einsparung einer separaten Getriebestufe GK steht in diesem Fall der mögliche Nachteil einer von eins verschiedenen Koppelübersetzung i_{K} zwischen den beiden Eingangswellen GE1, GE2 gegenüber (i_{K}≠1).

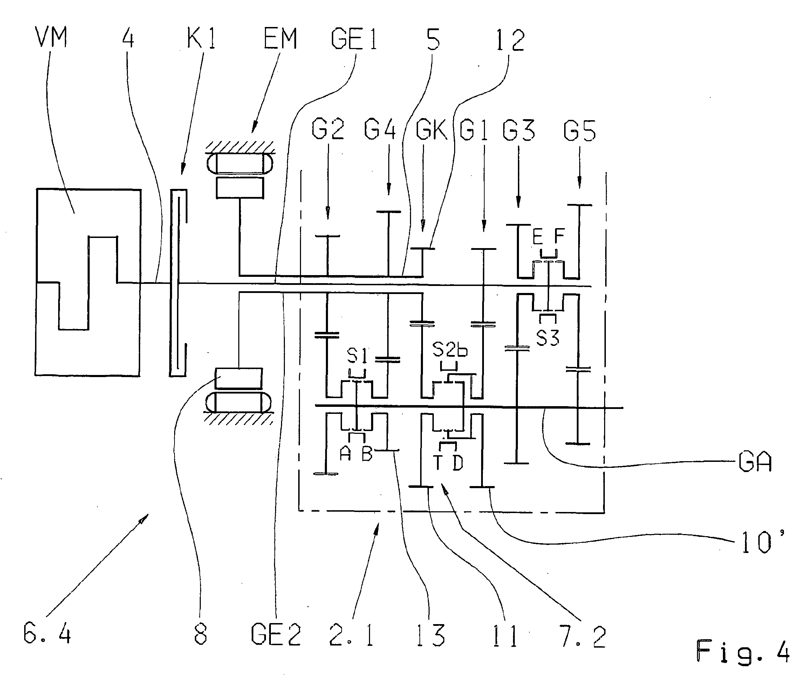

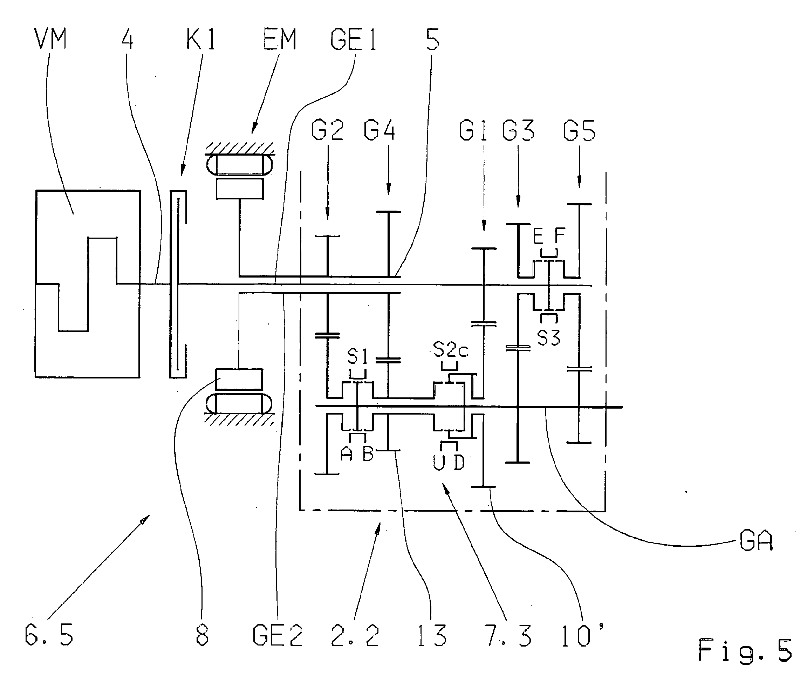

Bei den beiden vorgenannten Ausführungen des Schaltgetriebes (nach den Figuren 4 und 5) ist zur Vereinfachung der Betätigungsvorrichtung bevorzugt vorgesehen, dass die Schaltkupplung (T, U) der jeweiligen Koppelvorrichtung mit der Gangkupplung D des getriebeinneren Gangradsatzes G1 in einem gemeinsamen Schaltpaket (S2b, S2c) zusammengefasst ist, über das das Losrad des getriebeinneren Gangradsatzes G1 in einer ersten Schaltstellung drehfest mit dem Losrad der Getriebestufe GK bzw. des verbliebenen Gangradsatzes (G4) der beiden der zweiten Eingangswelle GE2 zugeordneten Gangradsätze G4, R gekoppelt ist, in einer Neutralstellung ungekoppelt ist, und in einer zweiten Schaltstellung drehfest mit der Ausgangswelle GA gekoppelt ist

Wenn in dem zu Grunde liegenden Doppelkupplungsgetriebe (entsprechend Fig. 12) die Gangradsätze (G1 - G7, R) jeweils zwischen einer der beiden Eingangswellen GE1, GE2 und einer von zwei jeweils über eine Ausgangskonstante AK1, AK2 mit der Ausgangswelle GA in Triebverbindung stehenden Vorgelegewellen VG1, VG2 angeordnet sind, und zumindest die Losräder und die zugeordneten Gangkupplungen C, D der beiden der zweiten Eingangswelle GE2 und einer Vorgelegewelle (VG2) der beiden Vorgelegewellen VG1, VG2 zugeordneten und an dem getriebeseitigen Ende der zweiten Eingangswelle GE2 angeordneten Gangradsätze R, G6 auf der betreffenden Vorgelegewelle VG2 angeordnet sind, umfasst die Koppelvorrichtung bevorzugt eine Getriebestufe GK*, die aus einem auf der betreffenden Vorgelegewelle VG2 drehbar gelagerten Losrad und einem auf der ersten Eingangswelle GE1 drehfest angeordneten Festrad besteht, und eine Schaltkupplung X zur Kopplung des Losrades des verbliebenen Gangradsatzes (G6) der beiden der zweiten Eingangswelle GE2 zugeordneten Gangradsätze R, G6 mit dem Losrad der Getriebestufe GK*.

Auch in diesem Fall entspricht die Übersetzung i_{GK}* der Getriebestufe GK* bevorzugt der Übersetzung i_{G6} des über die Schaltkupplung X der Koppelvorrichtung koppelbaren Gangradsatzes G6 (i_{GK}* = i_{G6}), damit die wirksame Koppelübersetzung i_{K} zwischen der ersten Eingangswelle GE1 und der zweiten Eingangswelle GE2 bei geschlossener Schaltkupplung X gleich eins ist (i_{K}.= i_{G6} / i_{GK}* = 1).

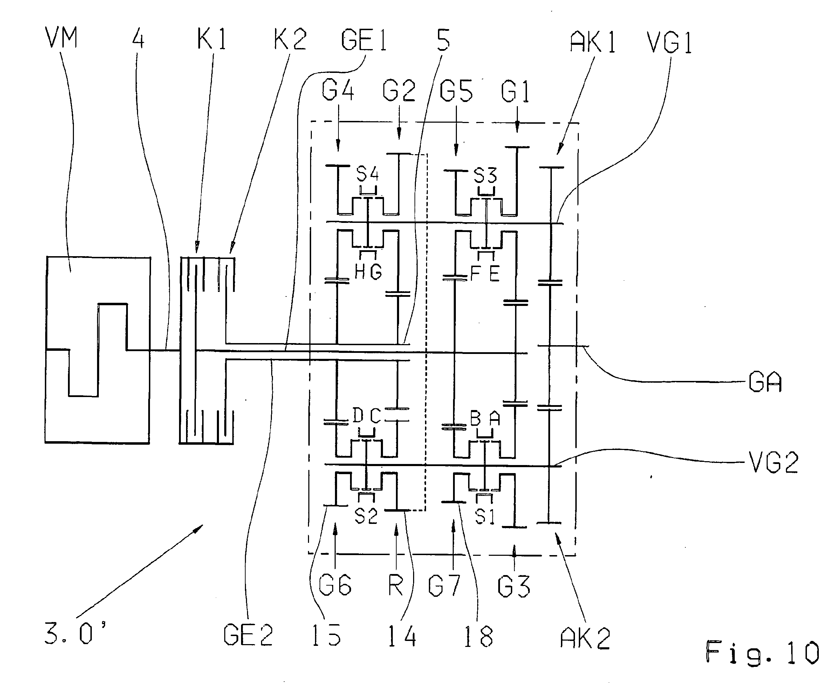

Wenn in dem zugrunde liegenden Doppelkupplungsgetriebe (entsprechend Fig. 10) neben den zuvor genannten Merkmalen auch das Losrad und die zugeordnete Gangkupplung B des der ersten Eingangswelle GE1 zugeordneten und axial benachbart zu dem getriebeseitigen Ende der zweiten Eingangswelle GE2 angeordneten getriebeinneren Gangradsatzes G7 auf der betreffenden Vorgelegewelle VG2 angeordnet sind, kann die Koppelvorrichtung alternativ auch den getriebeinneren Gangradsatz G7 und eine Schaltkupplung Y zur Kopplung des Losrades des verbliebenen Gangradsatzes (G6) der beiden Gangradsätze R, G6 mit dem Losrad des getriebeinneren Gangradsatzes G7 umfassen. Auch in diesem Fall steht dem Vorteil der Einsparung einer separaten Getriebestufe GK* der mögliche Nachteil einer von eins verschiedenen Koppelübersetzung i_{K} zwischen den beiden Eingangswellen GE1, GE2 gegenüber (i_{K} ≠ 1).

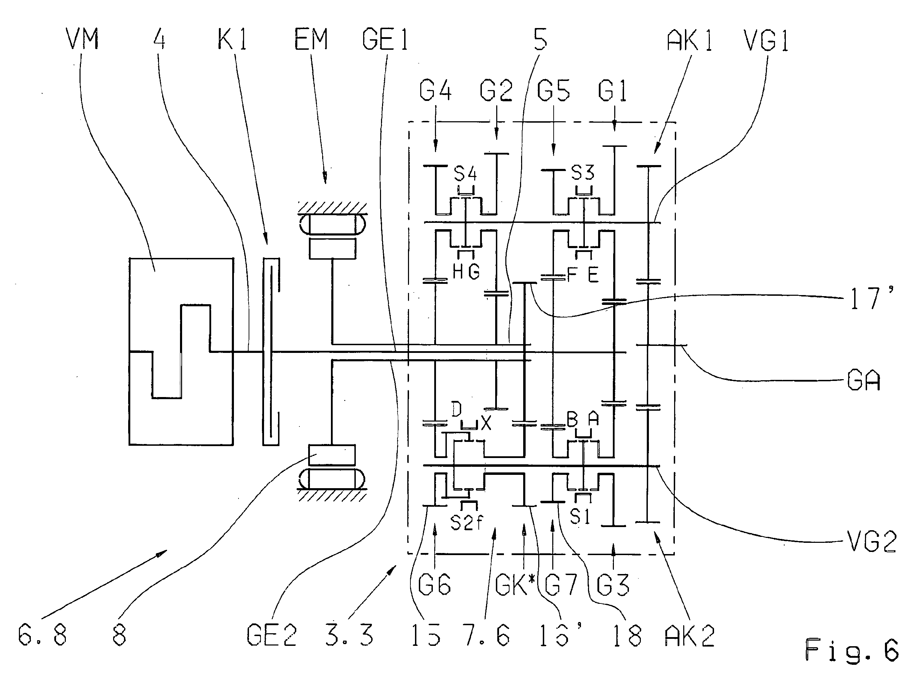

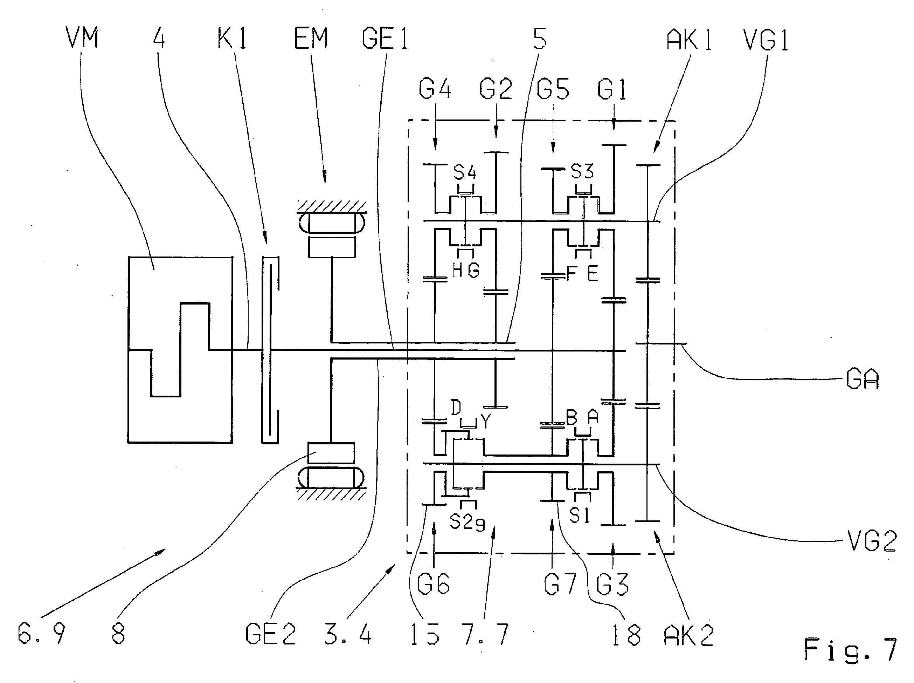

Bei den beiden vorgenannten Ausführungen des Schaltgetriebes (nach den Figuren 6 und 7) ist zur Vereinfachung der Betätigungsvorrichtung bevorzugt vorgesehen, dass die Schaltkupplung (X, Y) der jeweiligen Koppelvorrichtung mit der Gangkupplung D des verbliebenen Gangradsatzes (G6) der beiden der zweiten Eingangswelle GE2 zugeordneten Gangradsätze R, G6 in einem gemeinsamen Schaltpaket (S2f, S2g) zusammengefasst ist, über das das Losrad des betreffenden Gangradsatzes G6 in einer ersten Schaltstellung drehfest mit dem Losrad der Getriebestufe GK* bzw. des der ersten Eingangswelle GE1 zugeordneten getriebeinneren Gangradsatzes G7 gekoppelt ist, in einer Neutralstellung ungekoppelt ist, und in einer zweiten Schaltstellung drehfest mit der betreffenden Vorgelegewelle VG2 gekoppelt ist.

Bei den vorgenannten Ausführungsformen des Hybridantriebs kann die erste Eingangswelle jeweils über eine Reibungskupplung K1 mit der Triebwelle des Verbrennungsmotors verbindbar sein.

Es ist jedoch auch möglich, dass die erste Eingangswelle jeweils über eine robustere und kostengünstigere Klauenkupplung mit der Triebwelle des Verbren- , nungsmotors verbindbar ist, da diese bei geschlossener Schaltkupplung mittels der Elektromaschine synchronisierbar ist.

Die erste Eingangswelle kann jedoch auch unmittelbar drehfest mit der Triebwelle des Verbrennungsmotors verbunden sein, und somit die betreffende Trennkupplung eingespart werden. Hierdurch stehen zwar die der ersten Eingangswelle zugeordneten Gangradsätze (G1, G3, G5; G2, G4, G6) für einen reinen Elektrofahrbetrieb, d.h. einen Antrieb nur über die Elektromaschine, nicht zur Verfügung, aufgrund des gegenüber einem Verbrennungsmotor größeren nutzbaren Drehzahlbereichs einer Elektromaschine stellt dies aber keine wesentliche Betriebseinschränkung dar.

Bei den vorgenannten Ausführungsformen des Hybridantriebs kann die Elektromaschine jeweils koaxial über der ersten Eingangswelle angeordnet sein, und der Rotor der Elektromaschine unmittelbar drehfest mit der zweiten Eingangswelle verbunden sein.

Um eine leistungsschwächere und entsprechend kompaktere sowie leichtere Elektromaschine verwenden zu können, kann jedoch auch vorgesehen sein, dass die Elektromaschine achsparallel benachbart zu der ersten Eingangswelle angeordnet ist, und der Rotor der Elektromaschine über eine Eingangsgetriebestufe KE mit einer Übersetzung i_{KE} größer als eins mit der zweiten Eingangswelle in Triebverbindung steht (i_{KE} > 1,0).

Für denselben Zweck kann auch alternativ vorgesehen sein, dass die Elektromaschine koaxial über der ersten Eingangswelle angeordnet ist, und der Rotor der Elektromaschine über eine als Planetengetriebe ausgebildete Eingangsgetriebestufe KE' mit einer Übersetzung I_{KE}' größer als eins mit der zweiten Eingangswelle GE2 in Triebverbindung steht (i_{KE}' > 1,0).

Zur Verdeutlichung der Erfindung ist der Beschreibung eine Zeichnung mit Ausführungsbeispielen beigefügt. In dieser zeigt
- Fig. 1: einen Hybridantrieb eines Kraftfahrzeugs mit einem Schaltgetriebe, das aus einem Doppelkupplungsgetriebe nach Fig. 8 abgeleitet ist,
- Fig. 2: eine erste Weiterbildung des Hybridantriebs nach Fig. 1,
- Fig. 3: eine zweite Weiterbildung des Hybridantriebs nach Fig. 1,
- Fig. 4: einen Hybridantrieb eines Kraftfahrzeugs mit einer ersten Ausführungsform eines Schaltgetriebes, das aus einem Doppelkupplungsgetriebe nach Fig. 9 abgeleitet ist,
- Fig. 5: einen Hybridantrieb eines Kraftfahrzeugs mit einer zweiten Ausführungsform eines Schaltgetriebes, das aus einem Doppelkupplungsgetriebe nach Fig. 9 abgeleitet ist,
- Fig. 6: einen Hybridantrieb eines Kraftfahrzeugs mit einer ersten Ausführungsform eines Schaltgetriebes, das aus einem Doppelkupplungsgetriebe nach Fig. 10 abgeleitet ist,
- Fig. 7: einen Hybridantrieb eines Kraftfahrzeugs mit einer zweiten Ausführungsform eines Schaltgetriebes, das aus einem Doppelkupplungsgetriebe nach Fig. 10 abgeleitet ist,
- Fig. 8: ein erstes Doppelkupplungsgetriebe,
- Fig. 9: ein zweites Doppelkupplungsgetriebe, und
- Fig. 10: ein drittes Doppelkupplungsgetriebe.

In Fig. 8 ist in schematischer Form ein an sich bekanntes Doppelkupplungsgetriebe 1.0' abgebildet, aus dem ein nachfolgend beschriebenes Schaltgetriebe 1.1 eines Hybridantriebs 6.1 abgeleitet ist. Das Doppelkupplungsgetriebe 1.0' weist zwei koaxiale Eingangswellen GE1, GE2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Reibungskupplung K1, K2 mit der Triebwelle 4 eines Verbrennungsmotors VM verbindbar. Ausgangsseitig sind beide Eingangswellen GE1, GE2 jeweils über mehrere selektiv schaltbare Gangradsätze R, G1, G3, G5 bzw. G2, G4 mit der Ausgangswelle GA in Triebverbindung bringbar.

Vorliegend sind der ersten Eingangswelle GE1 die Gangradsätze G1, G3, G5 der ungeraden Vorwärtsgänge zugeordnet. Der zweiten Eingangswelle GE2 sind die Gangradsätze G2, G4 der geraden Vorwärtsgänge und der Umkehr-Gangradsatz R des Rückwärtsgangs zugeordnet. Der Gangradsatz G1 des ersten Vorwärtsgangs ist der ersten Eingangswelle GE1 zugeordnet und axial benachbart zu dem getriebeseitigen Ende der zweiten Eingangswelle GE2 angeordnet ist. Der Umkehr-Gangradsatz R des Rückwärtsgangs ist an dem getriebeseitigen Ende der zweiten Eingangswelle GE2 angeordnet. Demzufolge sind das Losrad 9* und die zugeordnete Gangkupplung C des Umkehr-Gangradsatzes R auf der zweiten Eingangswelle GE2 angeordnet, wobei die Gangkupplung C Bestandteil eines separaten Schaltpakets S2x ist, das eine Schaltstellung, in der das Losrad 9* mit der zweiten Eingangswelle GE2 gekoppelt ist, und eine Neutralstellung, in der das Losrad 9* ungekoppelt ist, aufweist. Das Losrad 10 und die zugeordnete Gangkupplung D des Gangradsatzes G1 des ersten Vorwärtsgangs sind auf der ersten Eingangswelle GE1 angeordnet. Die Gangkupplung D ist Bestandteil eines separaten Schaltpakets S2y, das eine Schaltstellung, in der das Losrad 10 mit der ersten Eingangswelle GE1 gekoppelt ist, und eine Neutralstellung, in der das Losrad 10 ungekoppelt ist, aufweist.

Die Losräder und die Gangkupplungen A, B, C, D, E und F der Gangradsätze R, G1, G3, G5 bzw. G2, G4 sind somit jeweils auf der zugeordneten Eingangswelle GE1, GE2 angeordnet, wogegen die betreffenden Festräder jeweils drehfest auf der Ausgangswelle GA angeordnet sind. Die Gangkupplungen A bis F sind jeweils paarweise in einem gemeinsamen Schaltpaket S1, S2, S3 zusammengefasst. So sind die Gangkupplungen A und B der Gangradsätze G2, G4 des zweiten und des vierten Vorwärtsgangs in einem ersten Schaltpaket S1, die Gangkupplungen C und D des Umkehr-Gangradsatzes R des Rückwärtsgangs und des Gangradsatzes G1 des ersten Vorwärtsgangs in einem zweiten Schaltpaket S2, sowie die Gangkupplungen E und F der Gangradsätze G3, G5 des dritten und des fünften Vorwärtsgangs in einem dritten Schaltpaket S3 angeordnet.

Für das nachfolgend beschriebene Schaltgetriebe 1.1 eines Hybridantriebs 6.1, 6.2, 6.3 gemäß den Figuren 1 bis 3 ist es wichtig festzuhalten, dass der an dem getriebeseitigen Ende 5 der zweiten Eingangswelle GE2 angeordnete Umkehr-Gangradsatz R der zweiten Eingangswelle GE2 zugeordnet und der axial daneben angeordnete Gangradsatz G1 der ersten Eingangswelle GE1 zugeordnet sind, und dass das Losrad 9* und die zugeordnete Gangkupplung C des Gangradsatzes R auf der zweiten Eingangswelle GE2 angeordnet, und das Losrad 10 sowie die zugeordneten Gangkupplungen D des Gangradsatzes G1 auf der ersten Eingangswelle GE1 angeordnet sind.

Ausgehend von dem Doppelkupplungsgetriebe 1.0' nach Fig. 8 ist ein Schaltgetriebe 1.1 eines Hybridantriebs 6.1 gemäß Fig. 1 dadurch geschaffen, dass anstelle des Umkehr-Gangradsatzes R des Rückwärtsgangs und der zugeordneten Gangkupplung C eine Koppelvorrichtung 7.1 vorgesehen ist, mittels der die beiden Eingangswellen GE1, GE2 miteinander in Triebverbindung bringbar sind. Vorliegend umfasst die Koppelvorrichtung 7.1 eine auf der zweiten Eingangswelle GE2 angeordnete Schaltkupplung S anstelle der Gangkupplung C des Rückwärtsgangs, mittels der die erste Eingangswelle GE1 unmittelbar mit dem getriebeseitigen Ende 5 der zweiten Eingangswelle GE2 koppelbar ist.

In dem Hybridantrieb 6.1 nach Fig. 1 ist die erste Eingangswelle GE1 eingangsseitig über eine erste Reibungskupplung K1 mit der Triebwelle 4 des Verbrennungsmotors VM verbindbar. Die zweite Eingangswelle GE2 ist eingangsseitig unmittelbar drehfest mit dem Rotor 8 einer als Motor und als Generator betreibbaren Elektromaschine EM verbunden, die koaxial über der ersten Eingangswelle GE1 angeordnet ist. In dem Schaltgetriebe 1.1 ist der in dem zugrunde liegenden Doppelkupplungsgetriebe 1.0' vorhandene Umkehr-Gangradsatz R des Rückwärtsgangs vollständig weggelassen, was problemlos möglich ist, da ein Rückwärts-Anfahren und Rückwärts-Rangieren zum Beispiel über den Gangradsatz G2 des zweiten Vorwärtsgangs in Verbindung mit einer Drehrichtungsumkehr der Elektromaschine EM erfolgen kann. Das Schaltgetriebe 1.1 des Hybridantriebs 6.1 nach Fig. 1 ist demnach mit nur geringen Änderungen bauraumneutral und ohne wesentliche Funktionseinschränkungen aus dem Doppelkupplungsgetriebe 1.0' nach Fig. 8 abgeleitet und entsprechend kostengünstig herstellbar.

In Fig. 2 und Fig. 3 abgebildete Weiterbildungen des Hybridantriebs 6.1 nach Fig. 1 weisen beispielhaft Gestaltungsmerkmale auf, die in beliebiger Kombination und unabhängig voneinander in Verbindung mit allen vorliegend beschriebenen Schaltgetrieben 1.1; 2.1, 2.2; 3.3, 3.4 sowie ähnlich aufgebauten Schaltgetrieben zur Anwendung kommen können.

In der Ausführungsform des Hybridantriebs 6.2 nach Fig. 2 ist die erste Eingangswelle GE1 eingangsseitig über eine unsynchronisierte Klauenkupplung K1' mit der Triebwelle 4 des Verbrennungsmotors VM verbindbar. Eine Ausbildung als Klauenkupplung K1' ist gegenüber einer Reibungskupplung K1 kostengünstiger und deshalb möglich, weil diese bei geschlossener Schaltkupplung S mittels der Elektromaschine EM' synchronisierbar ist. Die Elektromaschine EM' kann, wie in Fig. 2 ebenfalls beispielhaft veranschaulicht ist, auch achsparallel benachbart zu der ersten Eingangswelle GE1 angeordnet sein, und der Rotor 8' der Elektromaschine EM' kann über eine vorliegend als Stirnradpaar ausgebildete Eingangsgetriebestufe KE, die zweckmäßig eine Übersetzung i_{KE} größer als eins aufweist (i_{KE} > 1,0), mit der zweiten Eingangswelle GE2 in Triebverbindung stehen. Hierdurch kann die Elektromaschine EM' leistungsschwächer und entsprechend kompakter sowie leichter ausgebildet sein.

In der Ausführungsform des Hybridantriebs 6.3 nach Fig. 3 ist die erste Eingangswelle GE1 eingangsseitig unmittelbar, d.h. ohne eine Trennkupplung K1, K1', drehfest mit der Triebwelle 4 des Verbrennungsmotors VM verbunden, was eine weitere Vereinfachung und Kosteneinsparung darstellt. Hierdurch stehen zwar die der ersten Eingangswelle GE1 zugeordneten Gangradsätze G1, G3, G5 für einen reinen Elektrofahrbetrieb, d.h. einen Antrieb nur über die Elektromaschine EM", nicht zur Verfügung. Aufgrund des gegenüber einem Verbrennungsmotor VM größeren nutzbaren Drehzahlbereichs einer Elektromaschine EM" stellt dies aber keine wesentliche Betriebseinschränkung dar. Die Elektromaschine EM" kann, wie in Fig. 3 ebenfalls beispielhaft veranschaulicht ist, auch koaxial über der ersten Eingangswelle GE1 angeordnet sein. Zudem kann der Rotor 8" der Elektromaschine EM" über eine als Planetengetriebe ausgebildete Eingangsgetriebestufe KE', die zweckmäßig eine Übersetzung i_{KE}' größer als eins aufweist (i_{KE}' > 1,0), mit der zweiten Eingangswelle GE2 in Triebverbindung stehen. Auch in diesem Fall kann die Elektromaschine EM" leistungsschwächer und entsprechend kompakter sowie leichter ausgebildet sein.

In Fig. 9 ist in schematischer Form ein an sich bekanntes Doppelkupplungsgetriebe 2.0' abgebildet, aus dem zwei nachfolgend beschriebene Ausführungsformen eines Schaltgetriebes 2.1, 2.2 eines Hybridantriebs 6.4, 6.5 abgeleitet sind. Das Doppelkupplungsgetriebe 2.0' ist weitgehend identisch zu dem Doppelkupplungsgetriebe 1.0' nach Fig. 8 ausgebildet. Bei diesem Doppelkupplungsgetriebe 2.0' ist der Umkehr-Gangradsatz R des Rückwärtsgangs an dem getriebeseitigen Ende 5 der zweiten Eingangswelle GE2 angeordnet, wogegen der Gangradsatz G1 des ersten Vorwärtsgangs weiterhin der ersten Eingangswelle GE1 zugeordnet und axial benachbart zu dem getriebeseitigen Ende der zweiten Eingangswelle GE2 angeordnet ist. Der wesentliche Unterschied zu dem Doppelkupplungsgetriebe 1.0' besteht darin, dass die Losräder und die Gangkupplungen A, B, C, D der Gangradsätze G2, G4 und R, G1 nunmehr jeweils auf der Ausgangswelle GA und die betreffenden Festräder jeweils drehfest auf der zugeordneten Eingangswelle GE2 bzw. GE1 angeordnet sind. Demzufolge sind jetzt auch die beiden Schaltpakete S1, S2, in denen die Gangkupplungen A, B der Gangradsätze G2, G4 des zweiten Vorwärtsgangs und des vierten Vorwärtsgangs sowie die Gangkupplungen C, D des Umkehr-Gangradsatzes R des Rückwärtsgangs und des Gangradsatzes G1 des ersten Vorwärtsgangs zusammengefasst sind, auf der Ausgangswelle GA angeordnet.

Für die nachfolgend beschriebenen Ausführungen eines Schaltgetriebes 2.1, 2.2 eines Hybridantriebs 6.4, 6.5 nach den Figuren 4 und 5 ist es wichtig festzuhalten, dass der an dem getriebeseitigen Ende 5 der zweiten Eingangswelle GE2 angeordnete Umkehr-Gangradsatz R der zweiten Eingangswelle GE2 und der axial daneben angeordnete Gangradsatz G1 der ersten Eingangswelle GE1 zugeordnet sind, und dass die Losräder 9', 10' sowie die zugeordneten Gangkupplungen C, D dieser Gangradsätze R, G1 auf der Ausgangswelle GA angeordnet sind.

Für die zweite Ausführungsform des Schaltgetriebes 2.2 nach Fig. 5 ist zudem von Bedeutung, dass auch das Losrad 13 und die zugeordnete Gangkupplung B des der zweiten Eingangswelle GE2 zugeordneten und an deren getriebeseitigen Ende 5 angeordneten Gangradsatzes G4 ebenfalls auf der Ausgangswelle GA angeordnet sind.

Ausgehend von dem Doppelkupplungsgetriebe 2.0' nach Fig. 8 ist eine erste Ausführungsform eines Schaltgetriebes 2.1 eines Hybridantriebs 6.4 nach Fig. 4 dadurch geschaffen, dass anstelle des Umkehr-Gangradsatzes R des Rückwärtsgangs und der zugeordneten Gangkupplung C eine Koppelvorrichtung 7.2 vorgesehen ist, mittels der die beiden Eingangswellen GE1, GE2 miteinander in Triebverbindung bringbar sind. Die Koppelvorrichtung 7.2 umfasst eine Getriebestufe GK mit einem auf der Ausgangswelle GA drehbar gelagerten Losrad 11 und einem an dem getriebeseitigen Ende 5 der zweiten Eingangswelle GE2 drehfest angeordneten Festrad 12 sowie einer Schaltkupplung T, die in dem Schaltgetriebe 2.1 anstelle des Umkehr-Gangradsatzes R sowie der zugeordneten Gangkupplung C des Rückwärtsgangs des zugrunde liegenden Doppelkupplungsgetriebes 2.0' (Fig. 8) angeordnet sind.

Die Schaltkupplung T der Getriebestufe GK ist mit der Gangkupplung D des Gangradsatzes G1 des ersten Vorwärtsgangs in einem gemeinsamen Schaltpaket S2b zusammengefasst, über das das Losrad 10' des Gangradsatzes G1 des ersten Vorwärtsgangs in einer ersten Schaltstellung drehfest mit dem Losrad 11 der Getriebestufe GK gekoppelt ist, in einer Neutralstellung ungekoppelt ist, und in einer zweiten Schaltstellung drehfest mit der Ausgangswelle GA gekoppelt ist.

Die zwischen der Ausgangswelle GA und der zweiten Eingangswelle GE2 wirksame Übersetzung i_{GK} der Getriebestufe GK entspricht bevorzugt der Übersetzung i_{G1} des Gangradsatzes G1 des ersten Vorwärtsgangs (i_{GK} = i_{G1}), da die wirksame Koppelübersetzung i_{K} zwischen der ersten Eingangswelle GE1 und der zweiten Eingangswelle GE2 bei geschlossener Schaltkupplung T dann gleich eins ist (i_{K} = i_{G1} /i_{GK}=1).

Eine zweite aus dem Doppelkupplungsgetriebe 2.0 nach Fig. 9 abgeleitete Ausführungsform des Schaltgetriebes 2.2 eines Hybridantriebs 6.5 nach Fig. 5 ist weitgehend identisch mit dem Schaltgetriebe 2.1 gemäß Fig. 4. Der wesentliche Unterschied dazu besteht darin, dass die Koppelvorrichtung 7.3 nunmehr den axial benachbarten, der zweiten Eingangswelle GE2 zugeordneten Gangradsatz G4 des vierten Vorwärtsgangs und eine Schaltkupplung U umfasst, d.h., dass anstelle einer separaten Getriebestufe GK der Gangradsatz G4 des vierten Vorwärtsgangs zusätzlich zur Kopplung der beiden Eingangswellen GE1, GE2 genutzt wird.

Die Schaltkupplung U ist dabei mit der Gangkupplung D des Gangradsatzes G1 des ersten Vorwärtsgangs in einem gemeinsamen Schaltpaket S2c zusammengefasst, über das das Losrad 10' des Gangradsatzes G1 des ersten Vorwärtsgangs in einer ersten Schaltstellung drehfest mit dem Losrad 13 des Gangradsatzes G4 des vierten Vorwärtsgangs gekoppelt ist, in einer Neutralstellung ungekoppelt ist, und in einer zweiten Schaltstellung drehfest mit der Ausgangswelle GA gekoppelt ist. Dem Vorteil der Einsparung einer separaten Getriebestufe GK steht in diesem Fall der mögliche Nachteil einer von eins verschiedenen Koppelübersetzung i_{K} gegenüber (i_{K} ≠ 1). Die bei geschlossener Schaltkupplung U zwischen der ersten Eingangswelle GE1 und der zweiten Eingangswelle GE2 wirksame Koppelübersetzung i_{K} ergibt sich in der vorliegenden Ausführungsform des Schaltgetriebes 2.2 aus der Gleichung i_{K} = i_{G1} / i_{G4} > 1.

Auch die Schaltgetriebe 2.1, 2.2 der Hybridantriebe 6.4, 6.5 nach den Figuren 4 und 5 sind jeweils mit geringen Änderungen bauraumneutral und ohne wesentliche Funktionseinschränkungen aus dem Doppelkupplungsgetriebe 2.0' nach Fig. 9 abgeleitet und entsprechend kostengünstig herstellbar.

Aus dem an sich bekannten Doppelkupplungsgetriebe 3.0' nach Fig. 10 können zwei nachfolgend beschriebene Ausführungsformen eines Schaltgetriebes 3.3, 3.4 eines Hybridantriebs 6.8, 6.9 abgeleitet werden. Das Doppelkupplungsgetriebe 3.0' weist zwei koaxiale Eingangswellen GE1, GE2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Reibungskupplung K1, K2 mit der Triebwelle 4 eines Verbrennungsmotors VM verbindbar. Ausgangsseitig sind beide Eingangswellen GE1, GE2 jeweils über mehrere selektiv schaltbare Gangradsätze R, G2, G4, G6 bzw. G1, G3, G5, G7 mit einer ersten Vorgelegewelle VG1 und einer zweiten Vorgelegewelle VG2 in Triebverbindung bringbar, die über jeweils eine Ausgangskonstante AK1, AK2 mit der Ausgangswelle GA in Triebverbindung stehen.

Vorliegend sind der zweiten Eingangswelle GE2 der Umkehr-Gangradsatz R des Rückwärtsgangs und die Gangradsätze G2, G4, G6 der geraden Vorwärtsgänge zugeordnet, die paarweise in einer gemeinsamen Radialebene angeordnet sind und jeweils ein gemeinsames Festrad nutzen. Der Umkehr-Gangradsatz R des Rückwärtsgangs umfasst ein auf der zweiten Vorgelegewelle VG2 angeordnetes Losrad 14 und den in derselben Radialebene zwischen der ersten Eingangswelle GE1 und der ersten Vorgelegewelle VG1 angeordneten Gangradsatz G2 des zweiten Vorwärtsgangs. Der ersten Eingangswelle GE1 sind die Gangradsätze G1, G3, G5, G7 der ungeraden Vorwärtsgänge zugeordnet, die paarweise in einer gemeinsamen Radialebene angeordnet sind und jeweils ein gemeinsames Festrad nutzen.

Die Losräder und die Gangkupptungen A bis H der Gangradsätze R, G2, G4, G6 bzw. G1, G3, G5, G7 sind jeweils auf einer der beiden Vorgelegewellen VG1, VG2 angeordnet, wogegen die betreffenden Festräder jeweils drehfest auf der jeweils zugeordneten Eingangswelle GE1, GE2 angeordnet sind. Die Gangkupplungen A bis H sind jeweils paarweise in einem gemeinsamen Schaltpaket S1, S2, S3, S4 zusammengefasst. So sind die Gangkupplungen A, B der Gangradsätze G3, G7 des dritten und des siebten Vorwärtsgangs in einem ersten Schaltpaket S1, die Gangkupplungen C, D des Umkehr-Gangradsatzes R des Rückwärtsgangs und des Gangradsatzes G6 des sechsten Vorwärtsgangs in einem zweiten Schaltpaket S2, die Gangkupplungen E, F der Gangradsätze G1, G5 des ersten und des fünften Vorwärtsgangs in einem dritten Schaltpaket S3, und die Gangkupplungen G, H der Gangradsätze G2, G4 des zweiten und des vierten Vorwärtsgangs in einem vierten Schaltpaket S4 angeordnet.

Für die nachfolgend beschriebenen Ausführungsformen eines Schaltgetriebes 3.3, 3.4 eines Hybridantriebs 6.8, 6.9 nach den Figuren 6 und 7 ist es wichtig festzuhalten, dass der unmittelbar an dem getriebeseitigen Ende 5 der zweiten Eingangswelle GE2 angeordnete Umkehr-Gangradsatz R und der axial daneben angeordnete Gangradsatz G6 des sechsten Vorwärtsgangs der zweiten Eingangswelle GE2 zugeordnet sind, und dass die Losräder 14, 15 sowie die zugeordneten Gangkupplungen C, D dieser Gangradsätze R, G6 auf der zweiten Vorgelegewelle VG2 angeordnet sind.

Für die zweite Ausführungsform des Schaltgetriebes 3.4 nach Fig. 7 ist zudem von Bedeutung, dass auch das Losrad 18 und die zugeordnete Gangkupplung B des der ersten Eingangswelle GE1 zugeordneten und axial benachbart zu dem getriebeseitigen Ende 5 der zweiten Eingangswelle GE2 angeordneten Gangradsatzes G7 des siebten Vorwärtsgangs ebenfalls auf der zweiten Vorgelegewelle VG2 angeordnet sind.

Ausgehend von dem Doppelkupplungsgetriebe 3.0' nach Fig. 10 ist eine erste Ausführungsform eines Schaltgetriebes 3.3 eines Hybridantriebs 6.8 nach Fig. 6 gemäß dem Prinzip der Erfindung dadurch geschaffen, dass anstelle des Umkehr-Gangradsatzes R des Rückwärtsgangs und der zugeordneten Gangkupplung C eine Koppelvorrichtung 7.6 vorgesehen ist, mittels der die beiden Eingangswellen GE1, GE2 miteinander in Triebverbindung bringbar sind. Die Koppelvorrichtung 7.6 umfasst eine Getriebestufe GK* mit einem auf der zweiten Vorgelegewelle VG2 drehbar gelagerten Losrad 16' und einem axial benachbart zu dem getriebeseitigen Ende 5 der zweiten Eingangswelle GE2 auf der ersten Eingangswelle GE1 drehfest angeordneten Festrad 17' sowie eine Schaltkupplung X, die in dem Schaltgetriebe 3.3 anstelle des Umkehr-Gangradsatzes R und der zugeordneten Gangkupplung C des Rückwärtsgangs des zugrunde liegenden Doppelkupplungsgetriebes 3.0' angeordnet sind.

Die Schaltkupplung X der Getriebestufe GK* ist mit der Gangkupplung D des Gangradsatzes G6 des sechsten Vorwärtsgangs in einem gemeinsamen Schaltpaket S2f zusammengefasst, über das das Losrad 15 des Gangradsatzes G6 des sechsten Vorwärtsgangs in einer ersten Schaltstellung drehfest mit dem Losrad 16' der Getriebestufe GK* gekoppelt ist, in einer Neutralstellung ungekoppelt ist, und in einer zweiten Schaltstellung drehfest mit der zweiten Vorgelegewelle VG2 gekoppelt ist.

Die zwischen der zweiten Vorgelegewelle VG2 und der zweiten Eingangswelle GE2 wirksame Übersetzung i_{GK}* der Getriebestufe GK* entspricht bevorzugt der Übersetzung i_{G6} des Gangradsatzes G6 des sechsten Vorwärtsgangs (i_{GK}* = i_{G6}), da die wirksame Koppelübersetzung i_{K} zwischen der ersten Eingangswelle GE1 und der zweiten Eingangswelle GE2 bei geschlossener Schaltkupplung X dann gleich eins ist (i_{K} = i_{G6} / i_{GK}* = 1).

Eine zweite aus dem Doppelkupplungsgetriebe 3.0' nach Fig. 10 abgeleitete Ausführungsform des Schaltgetriebes 3.4 eines Hybridantriebs 6.9 nach Fig. 7 ist weitgehend identisch mit dem Schaltgetriebe 3.3 nach Fig. 6. Der wesentliche Unterschied dazu besteht darin, dass die Koppelvorrichtung 7.7 nunmehr den axial benachbart zu dem getriebeseitigen Ende 5 der zweiten Eingangswelle GE2 angeordneten, der ersten Eingangswelle GE1 zugeordneten Gangradsatz G7 des siebten Vorwärtsgangs und eine Schaltkupplung Y umfasst, d.h. dass anstelle einer separaten Getriebestufe GK* der Gangradsatz G7 des siebten Vorwärtsgangs zusätzlich zur Kopplung der beiden Eingangswellen GE1, GE2 genutzt wird.

Die Schaltkupplung Y ist mit der Gangkupplung D des Gangradsatzes G6 des sechsten Vorwärtsgangs in einem gemeinsamen Schaltpaket S2g zusammengefasst, über das das Losrad 15 des Gangradsatzes G6 des sechsten Vorwärtsgangs in einer ersten Schaltstellung drehfest mit dem Losrad 18 des Gangradsatzes G7 des siebten Vorwärtsgangs gekoppelt ist, in einer Neutralstellung ungekoppelt ist, und in einer zweiten Schaltstellung drehfest mit der zweiten Vorgelegewelle VG2 gekoppelt ist.

Dem Vorteil der Einsparung einer separaten Getriebestufe GK* steht der mögliche Nachteil einer von eins verschiedenen Koppelübersetzung i_{K} gegenüber (i_{K} ≠ 1). Die bei geschlossener Schaltkupplung Y zwischen der ersten Eingangswelle GE1 und der zweiten Eingangswelle GE2 wirksame Koppelübersetzung i_{K} ergibt sich in der vorliegenden Ausführung des Schaltgetriebes 3.4 aus der Beziehung i_{K} = i_{G7} / i_{G6} <1.

Auch die Schaltgetriebe 3.3, 3.4 der Hybridantriebe 6.8, 6.9 nach den Figuren 6 und 7 sind jeweils mit geringen Änderungen bauraumneutral und ohne wesentliche Funktionseinschränkungen aus dem Doppelkupplungsgetriebe 3.0' nach Fig. 10 abgeleitet sowie entsprechend kostengünstig herstellbar.

### Bezugszeichen

- 1.0': Doppelkupplungsgetriebe
- 1.1: Schaltgetriebe
- 2.0': Doppelkupplungsgetriebe
- 2.1: Schaltgetriebe
- 2.2: Schaltgetriebe
- 3.0': Doppelkupplungsgetriebe
- 3.3: Schaltgetriebe
- 3.4: Schaltgetriebe
- 4: Triebwelle von VM
- 5: Getriebeseitiges Ende von GE2
- 6.1: Hybridantrieb
- 6.2: Hybridantrieb
- 6.3: Hybridantrieb
- 6.4: Hybridantrieb
- 6.8: Hybridantrieb
- 6.9: Hybridantrieb
- 7.1: Koppelvorrichtung
- 7.2: Koppelvorrichtung
- 7.3: Koppelvorrichtung
- 7.6: Koppelvorrichtung
- 7.7: Koppelvorrichtung
- 8: Rotor von EM
- 8': Rotor von EM'
- 8": Rotor von EM"
- 9', 9*: Losrad von R
- 10, 10': Losrad von G1
- 11: Losrad von GK
- 12: Festrad von GK
- 13: Losrad von G4
- 14: Losrad von R
- 15: Losrad von G6
- 16': Losrad von GK*
- 17': Festrad von GK*
- 18: Losrad von G
- A: Gangkupplung von G2 und G3
- AK1: Erste Ausgangskonstante
- AK2: Zweite Ausgangskonstante
- B: Gangkupplung von G4 und G7
- C: Gangkupplung von R
- D: Gangkupplung von G1 und G6
- E: Gangkupplung von G3 und G1
- EM: Elektromaschine
- EM': Elektromaschine
- EM": Elektromaschine
- F: Gangkupplung von G1 und G5
- G: Gangkupplung von G2
- G1 - G7: Gangradsätze der Vorwärtsgänge
- GA: Ausgangswelle
- GE1: Erste Eingangswelle
- GE2: Zweite Eingangswelle
- GK: Getriebestufe
- GK*: Getriebestufe
- H: Gangkupplung von G4
- i_{G1}: Übersetzung von G1
- i_{G4}: Übersetzung von G4
- i_{G6}: Übersetzung von G6
- i_{G7}: Übersetzung von G7
- i_{GK}: Übersetzung von GK
- i_{GK}*: Übersetzung von GK*
- i_{K}: Koppelübersetzung
- i_{KE}: Übersetzung von KE
- i_{KE}': Übersetzung von KE'
- K1: Erste Reibungskupplung, Trennkupplung
- K1': Klauenkupplung, Trennkupplung
- K2: Zweite Reibungskupplung
- KE: Eingangsgetriebestufe
- KE': Eingangsgetriebestufe
- R: Umkehr-Gangradsatz des Rückwärtsgangs
- S: Schaltkupplung
- S1 - S4: Schaltpakete
- S2a: Schaltpaket
- S2b: Schaltpaket
- S2c: Schaltpaket
- S2f: Schaltpaket
- S2g: Schaltpaket
- S2x: Schaltpaket
- S2y: Schaltpaket
- T: Schaltkupplung
- U: Schaltkupplung
- VG1: Erste Vorgelegewelle
- VG2: Zweite Vorgelegewelle
- VM: Verbrennungsmotor
- X: Schaltkupplung
- Y: Schaltkupplung

## Patentansprüche

1. Schaltgetriebe eines Hybridantriebs für ein Kraftfahrzeug, mit zwei Eingangswellen (GE1, GE2) und einer gemeinsamen Ausgangswelle (GA), wobei die erste Eingangswelle (GE1) mit der Triebwelle (4) eines Verbrennungsmotors (VM) verbindbar und über eine erste Gruppe selektiv schaltbarer Gangradsätze (G1, G3, G5; G1, G3, G5, G7) mit der Ausgangswelle (GA) in Triebverbindung bringbar ist, wobei die zweite Eingangswelle (GE2) mit dem Rotor (8, 8', 8") einer als Motor und als Generator betreibbaren Elektromaschine (EM, EM', EM") in Triebverbindung steht und über eine zweite Gruppe selektiv schaltbarer Gangradsätze (G2, G4; G2, G4, G6) mit der Ausgangswelle (GA) in Triebverbindung bringbar ist, und wobei beide Eingangswellen (GE1, GE2) über eine schaltbare Koppelvorrichtung (7.1, 7.2, 7.3, 7.6, 7.7) miteinander in Triebverbindung bringbar sind, wobei die erste Eingangswelle (GE1) zentral angeordnet ist, die zweite Eingangswelle (GE2) als eine Hohlwelle ausgebildet und koaxial über der ersten Eingangswelle (GE1) angeordnet ist, wobei die Koppelvorrichtung (7.1, 7.2, 7.3, 7.6, 7.7) der zweiten Eingangswelle (GE2) zugeordnet und an dem getriebeseitigen Ende (5) der zweiten Eingangswelle (GE2) angeordnet ist, **dadurch gekennzeichnet, dass** die Koppelvorrichtung (7.1, 7.2, 7.3, 7.6, 7.7) eine Getriebestufe (GK, G4; GK*, G7) und eine schaltbare Kupplung (S; T, U; X, Y) umfasst.

2. Schaltgetriebe nach Anspruch 1, **dadurch gekennzeichnet**, dassein Rückwärts-Fahren mittels einer Drehrichtungsumkehr der Elektromaschine (EM, EM', EM") ermöglicht wird.

3. Schaltgetriebe nach Anspruch 1 oder 2, **dadurch gekennzeichnet, dass** die Gangradsätze (G1 - G5) der Vorwärtsgänge jeweils unmittelbar zwischen einer der beiden Eingangswellen (GE1, GE2) und der Ausgangswelle (GA) angeordnet sind, wobei die Koppelvorrichtung (7.1), eine Schaltkupplung (S) zur unmittelbaren Kopplung des getriebeseitigen Endes (5) der zweiten Eingangswelle (GE2) mit der ersten Eingangswelle (GE1) umfasst.

4. Schaltgetriebe nach Anspruch 3, **dadurch gekennzeichnet, dass** das Losrad (10) sowie die zugeordnete Gangkupplung (D) des der ersten Eingangswelle (GE1) zugeordneten und zu dem getriebeseitigen Ende (5) der zweiten Eingangswelle (GE2) axial benachbarten Gangradsatzes (G1) des ersten Vorwärtsgangs auf der ersten Eingangswelle (GE1) angeordnet sind, wobei die Schaltkupplung (S) der Koppelvorrichtung (7.1) mit der Gangkupplung (D) des Gangradsatzes (G1) des ersten Vorwärtsgangs in einem gemeinsamen Schaltpaket (S2a) zusammengefasst ist, über das die erste Eingangswelle (GE1) in einer ersten Schaltstellung drehfest mit der zweiten Eingangswelle (GE2) gekoppelt ist, in einer Neutralstellung, ungekoppelt ist, und in einer zweiten Schaltstellung drehfest mit dem Losrad des Gangradsatzes (G1) des ersten Vorwärtsgangs gekoppelt ist.

5. Schaltgetriebe nach Anspruch 1 oder 2, **dadurch gekennzeichnet, dass** die Gangradsätze (G1 - G5) der Vorwärtsgänge jeweils unmittelbar zwischen einer der beiden Eingangswellen (GE1, GE2) und der Ausgangswelle (GA) angeordnet sind, und bei dem zumindest das Losrad (10') und die zugeordnete Gangkupplung (D) des der ersten Eingangswelle (GE1) zugeordneten und axial benachbart zu dem getriebeseitigen Ende (5) der zweiten Eingangswelle (GE2) angeordneten Gangradsatzes (G1) des ersten Vorwärtsgangs auf der Ausgangswelle (GA) angeordnet ist, wobei die Koppelvorrichtung (7.2) eine Getriebestufe (GK), die aus einem auf der Ausgangswelle (GA) drehbar gelagerten Losrad (11) und einem an dem getriebeseitigen Ende (5) der zweiten Ausgangswelle (GE2) drehfest angeordneten Festrad (12) besteht, und eine Schaltkupplung (T) zur Kopplung des Losrades (10') des Gangradsatzes (G1) des ersten Vorwärtsgangs mit dem Losrad (11) der Getriebestufe (GK) umfasst.

6. Schaltgetriebe nach Anspruch 1 oder 2, **dadurch gekennzeichnet, dass** die Gangradsätze (G1 - G5) der Vorwärtsgänge jeweils unmittelbar zwischen einer der beiden Eingangswellen (GE1, GE2) und der Ausgangswelle (GA) angeordnet sind, wobei zumindest die Losräder (10', 13) und die zugeordneten Gangkupplungen (B, D) des der ersten Eingangswelle (GE1) zugeordneten und axial benachbart zu dem getriebeseitigen Ende (5) der zweiten Eingangswelle (GE2) angeordneten Gangradsatzes (G1) des ersten Vorwärtsgangs sowie des der zweiten Eingangswelle (GE2) zugeordneten und an dem getriebeseitigen Ende (5) der zweiten Eingangswelle (GE2) angeordneten Gangradsatzes (G4) des vierten Vorwärtsgangs auf der Ausgangswelle (GA) angeordnet sind, und wobei die Koppelvorrichtung (7.3) den Gangradsatz (G4) des vierten Vorwärtsgangs und eine Schaltkupplung (U) zur Kopplung des Losrades (10') des Gangradsatzes (G1) des erstenVorwärtsgangs mit dem Losrad (13) des Gangradsatzes (G4) des vierten Vorwärtsgangs umfasst.

7. Schaltgetriebe nach Anspruch 5 oder 6, **dadurch gekennzeichnet, dass** die Schaltkupplung (T, U) der Koppelvorrichtung (7.2, 7.3) mit der Gangkupplung (D) des Gangradsatzes (G1) des ersten Vorwärtsgangs in einem gemeinsamen Schaltpaket (S2b, S2c) zusammengefasst ist, über das das Losrad (10') des getriebeinneren Gangradsatzes (G1) des erstenVorwärtsgangs in einer ersten Schaltstellung drehfest mit dem Losrad (11, 13) der Getriebestufe (GK) bzw. des Gangradsatzes (G4) des vierten Vorwärtsganges dgekoppelt ist, in einer Neutralstellung ungekoppelt ist, und in einer zweiten Schaltstellung drehfest mit der Ausgangswelle (GA) gekoppelt ist.

8. Schaltgetriebe nach Anspruch 1 oder 2, **dadurch gekennzeichnet, dass** die Gangradsätze (G1 - G7) der Vorwärtsgänge jeweils zwischen einer der beiden Eingangswellen (GE1, GE2) und einer von zwei jeweils über eine Ausgangskonstante (AK1, AK2) mit der Ausgangswelle (GA) in Triebverbindung stehenden Vorgelegewellen (VG1, VG2) angeordnet sind, wobei zumindest das Losrad (15) und die zugeordnete Gangkupplung (D) des der zweiten Eingangswelle (GE2) sowie einer (VG2) der beiden Vorgelegewellen (VG1, VG2) zugeordneten und an dem getriebeseitigen Ende (5) der zweiten Eingangswelle (GE2) angeordneten Gangradsatzes (G6) des sechsten Vorwärtsgangs auf der betreffenden Vorgelegewelle (VG2) angeordnet sind, wobei die Koppelvorrichtung (7.6) eine Getriebestufe (GK*), die aus einem auf der betreffenden Vorgelegewelle (VG2) drehbar gelagerten Losrad (16') und einem auf der ersten Eingangswelle (GE1) drehfest angeordneten Festrad (17') besteht, und eine Schaltkupplung (X) zur Kopplung des Losrades (15) des Gangradsatzes (G6) des sechsten Vörwärtsgangs mit dem Losrad (16') der Getriebestufe (GK*) umfasst.

9. Schaltgetriebe nach Anspruch 5 oder 8, **dadurch gekennzeichnet, dass** die Übersetzung (i_{GK}; i_{GK}*) der Getriebestufe (GK; GK*) der Übersetzung (i_{G1}; i_{G6}) des über die Schaltkupplung (T; X) der Koppelvorrichtung (7.2; 7.6) koppelbaren - Gangradsatzes (G1; G6) entspricht (i_{GK} = i_{G1}; i_{GK}* = i_{G6}).

10. Schaltgetriebe nach Anspruch 1 oder 2, **dadurch gekennzeichnet, dass** die Gangradsätze (G1 - G7) der Vorwärtsgänge jeweils zwischen einer der beiden Eingangswellen (GE1, GE2) und einer von zwei jeweils über eine Ausgangskonstante (AK1, AK2) mit der Ausgangswelle (GA) in Triebverbindung stehenden Vorgelegewellen (VG1, VG2) angeordnet sind, wobei zumindest die Losräder (15, 18) und die zugeordneten Gangkupplungen (B, D) des der zweiten Eingangswelle (GE2) und einer (VG2) der beiden Vorgelegewellen (VG1, VG2) zugeordneten und an dem getriebeseitigen Ende (5) der zweiten Eingangswelle (GE2) angeordneten Gangradsatzes (G6) des sechsten Vorwärtsgangs, sowie des der ersten Eingangswelle (GE1) zugeordneten und axial benachbart zu dem getriebeseitigen Ende (5) der zweiten Eingangswelle (GE2) angeordneten Gangradsatzes (G7) des siebten Vorwärtsgangs auf der betreffenden Vorgelegewelle (VG2) angeordnet sind, und wobei die Koppelvorrichtung (7.7) den Gangradsatz (G7) des siebten Vorwärtsgangs und eine Schaltkupplung (Y) zur Kopplung des Losrades (15) des Gangradsatzes (G6) des sechsten Vorwärtsgangs mit dem Losrad (18) des getriebeinneren Gangradsatzes (G7) umfasst.

11. Schaltgetriebe nach einem der Ansprüche 8 bis 10, **dadurch gekennzeichnet, dass** die Schaltkupplung (X, Y) der Koppelvorrichtung (7.6, 7.7) mit der Gangkupplung (D) des Gangradsatzes (G6) des sechsten Vorwärtsgangs in einem gemeinsamen Schaltpaket (S2f, S2g) zusammengefasst ist, über das (S2f, S2g) das Losrad (15) des Gangradsatzes (G6) des sechstenVorwärtsgangs in einer ersten Schaltstellung drehfest mit dem Losrad (16', 18) der Getriebestufe (GK*) bzw. des der ersten Eingangswelle (GE1) zugeordneten Gangradsatzes (G7) des siebten Vorwärtsgangs gekoppelt ist, in einer Neutralstellung ungekoppelt ist, und in einer zweiten Schaltstellung drehfest mit der betreffenden Vorgelegewelle (VG2) gekoppelt ist.

12. Schaltgetriebe nach einem der Ansprüche 1 bis 11, dadurch gekennzeich-9) net, dass die erste Eingangswelle (GE1) über eine Reibungskupplung (K1) mit der Triebwelle (4) des Verbrennungsmotors (VM) verbindbar ist.

13. Schaltgetriebe nach einem der Ansprüche 1 bis 11, **dadurch gekennzeichnet, dass** die erste Eingangswelle (GE1) über eine Klauenkupplung (K1') mit der Triebwelle (4) des Verbrennungsmotors (VM) verbindbar ist.

14. Schaltgetriebe nach einem der Ansprüche 1 bis 11, **dadurch gekennzeichnet, dass** die erste Eingangswelle (GE1) unmittelbar drehfest mit der Triebwelle (4) des Verbrennungsmotors (VM) verbunden ist.

15. Schaltgetriebe nach einem der Ansprüche 1 bis 14, **dadurch gekennzeichnet, dass** die Elektromaschine (EM) koaxial über der ersten Eingangswelle (GE1) angeordnet ist, und der Rotor (8) der Elektromaschine (EM) unmittelbar drehfest mit der zweiten Eingangswelle (GE2) verbunden ist.

16. Schaltgetriebe nach einem der Ansprüche 1 bis 14, **dadurch gekennzeichnet, dass** die Elektromaschine (EM') achsparallel benachbart zu der ersten Eingangswelle (GE1) angeordnet ist, und der Rotor (8') der Elektromaschine (EM') über eine Eingangsgetriebestufe (KE) mit einer Übersetzung (i_{KE}) größer als eins mit der zweiten Eingangswelle (GE2) in Triebverbindung steht (i_{KE} > 1,0).

17. Schaltgetriebe nach einem der Ansprüche 1 bis 14, **dadurch gekennzeichnet, dass** die Elektromaschine (EM") koaxial über der ersten Eingangswelle (GE1) angeordnet ist, und der Rotor (8") der Elektromaschine (EM") über eine als Planetengetriebe ausgebildete Eingangsgetriebestufe (KE') mit einer Übersetzung (i_{KE}') größer als eins mit der zweiten Eingangswelle (GE2) in Triebverbindung steht (i_{KE}' > 1,0).

## Claims

1. Manual gearbox of a hybrid drive for a motor vehicle, having two input shafts (GE1, GE2) and a common output shaft (GA), it being possible for the first input shaft (GE1) to be connected to the drive shaft (4) of an internal combustion engine (VM) and to be drive-connected to the output shaft (GA) via a first group of selectively shiftable gear sets (G1, G3, G5; G1, G3, G5, G7), the second input shaft (GE2) being drive-connected to the rotor (8, 8', 8") of an electric machine (EM, EM', EM") which can be operated as a motor and as a generator, and it being possible for the said second input shaft to be drive-connected to the output shaft (GA) via a second group of selectively shiftable gear sets (G2, G4; G2, G4, G6), and it being possible for both input shafts (GE1, GE2) to be drive-connected to one another via a switchable coupling apparatus (7.1, 7.2, 7.3, 7.6, 7.7), the first input shaft (GE1) being arranged centrally, the second input shaft (GE2) being configured as a hollow shaft and being arranged coaxially above the first input shaft (GE1), the coupling apparatus (7.1, 7.2, 7.3, 7.6, 7.7) being assigned to the second input shaft (GE2) and being arranged at the gearbox-side end (5) of the second input shaft (GE2), **characterized in that** the coupling apparatus (7.1, 7.2, 7.3, 7.6, 7.7) comprises a transmission stage (GK, G4; GK*, G7) and a switchable clutch (S; T, U; X, Y).

2. Manual gearbox according to Claim 1, **characterized in that** reverse driving is made possible by means of a rotational direction reversal of the electric machine (EM, EM', EM'').

3. Manual gearbox according to Claim 1 or 2, **characterized in that** the gear sets (G1-G5) of the forward gears are arranged in each case directly between one of the two input shafts (GE1, GE2) and the output shaft (GA), the coupling apparatus (7.1) comprising a shifting clutch (S) for coupling the gearbox-side end (5) of the second input shaft (GE2) directly to the first input shaft (GE1).

4. Manual gearbox according to Claim 3, **characterized in that** the idler gear (10) and the associated gear clutch (D) of the gear set (G1) of the first forward gear which is assigned to the first input shaft (GE1) and is axially adjacent with respect to the gearbox-side end (5) of the second input shaft (GE2) are arranged on the first input shaft (GE1), the shifting clutch (S) of the coupling apparatus (7.1) being combined with the gear clutch (D) of the gear set (G1) of the first forward gear in a common shifting package (S2a), via which, in a first shifting position, the first input shaft (GE1) is coupled fixedly to the second input shaft (GE2) so as to rotate with it, is uncoupled in a neutral position, and, in a second shifting position, is coupled fixedly to the idler gear of the gear set (G1) of the first forward gear so as to rotate with it.

5. Manual gearbox according to Claim 1 or 2, **characterized in that** the gear sets (G1-G5) of the forward gears are arranged in each case directly between one of the two input shafts (GE1, GE2) and the output shaft (GA), and in which manual gearbox at least the idler gear (10') and the associated gear clutch (D) of the gear set (G1) of the first forward gear which is assigned to the first input shaft (GE1) and is arranged axially adjacently with respect to the gearbox-side end (5) of the second input shaft (GE2) are arranged on the output shaft (GA), the coupling apparatus (7.2) comprising a transmission stage (GK) which consists of an idler gear (11) which is mounted rotatably on the output shaft (GA) and a fixed gear (12) which is arranged fixedly at the gearbox-side end (5) of the second output shaft (GE2) so as to rotate with it, and a shifting clutch (T) for coupling the idler gear (10') of the gear set (G1) of the first forward gear to the idler gear (11) of the transmission stage (GK).

6. Manual gearbox according to Claim 1 or 2, **characterized in that** the gear sets (G1-G5) of the forward gears are arranged in each case directly between one of the two input shafts (GE1, GE2) and the output shaft (GA), at least the idler gears (10', 13) and the associated gear clutches (B, D) of the gear set (G1) of the first forward gear which is assigned to the first input shaft (GE1) and is arranged axially adjacently with respect to the gearbox-side end (5) of the second input shaft (GE2) and of the gear set (G4) of the fourth forward gear which is assigned to the second input shaft (GE2) and is arranged at the gearbox-side end (5) of the second input shaft (GE2) are arranged on the output shaft (GA), and the coupling apparatus (7.3) comprising the gear set (G4) of the fourth forward gear and a shifting clutch (U) for coupling the idler gear (10') of the gear set (G1) of the first forward gear to the idler gear (13) of the gear set (G4) of the fourth forward gear.

7. Manual gearbox according to Claim 5 or 6, **characterized in that** the shifting clutch (T, U) of the coupling apparatus (7.2, 7.3) is combined with the gear clutch (D) of the gear set (G1) of the first forward gear in a common shifting package (S2b, S2c), via which the idler gear (10') of the gearbox-internal gear set (G1) of the first forward gear is coupled in a first shifting position fixedly to the idler gear (11, 13) of the transmission stage (GK) or the gear set (G4) of the fourth forward gear so as to rotate with it, is uncoupled in a neutral position, and is coupled fixedly to the output shaft (GA) so as to rotate with it in a second shifting position.

8. Manual gearbox according to Claim 1 or 2, **characterized in that** the gear sets (G1-G7) of the forward gears are arranged in each case between one of the two input shafts (GE1, GE2) and one of two countershafts (VG1, VG2) which are drive-connected in each case via an output constant (AK1, AK2) to the output shaft (GA), at least the idler gear (15) and the associated gear clutch (D) of the gear set (G6) of the sixth forward gear which is assigned to the second input shaft (GE2) and one (VG2) of the two countershafts (VG1, VG2) and is arranged at the gearbox-side end (5) of the second input shaft (GE2) are arranged on the relevant countershaft (VG2), the coupling apparatus (7.6) comprising a transmission stage (GK*) which consists of an idler gear (16') which is mounted rotatably on the relevant countershaft (VG2) and a fixed gear (17') which is arranged fixedly on the first input shaft (GE1) so as to rotate with it, and a shifting clutch (X) for coupling the idler gear (15) of the gear set (G6) of the sixth forward gear to the idler gear (16') of the transmission stage (GK*).

9. Manual gearbox according to Claim 5 or 8, **characterized in that** the transmission ratio (i_{GK}; i_{GK*}) of the transmission stage (GK; GK*) corresponds to the transmission ratio (i_{G1}; i_{G6}) of the gear set (G1; G6) which can be coupled via the shifting clutch (T; X) of the coupling apparatus (7.2; 7.6) (i_{GK} = i_{G1}; i_{GK}* = i_{G6}).

10. Manual gearbox according to Claim 1 or 2, **characterized in that** the gear sets (G1-G7) of the forward gears are arranged in each case between one of the two input shafts (GE1, GE2) and one of two countershafts (VG1, VG2) which are drive-connected in each case via an output constant (AK1, AK2) to the output shaft (GA), at least the idler gears (15, 18) and the associated gear clutches (B, D) of the gear set (G6) of the sixth forward gear which is assigned to the second input shaft (GE2) and one (VG2) of the two countershafts (VG1, VG2) and is arranged at the gearbox-side end (5) of the second input shaft (GE2) and of the gear set (G7) of the seventh forward gear which is assigned to the first input shaft (GE1) and is arranged axially adjacently with respect to the gearbox-side end (5) of the second input shaft (GE2) are arranged on the relevant countershaft (VG2), and the coupling apparatus (7.7) comprising the gear set (G7) of the seventh forward gear and a shifting clutch (Y) for coupling the idler gear (15) of the gear set (G6) of the sixth forward gear to the idler gear (18) of the gearbox-internal gear set (G7).

11. Manual gearbox according to one of Claims 8 to 10, **characterized in that** the shifting clutch (X, Y) of the coupling apparatus (7.6, 7.7) is combined with the gear clutch (D) of the gear set (G6) of the sixth forward gear in a common shifting package (S2f, S2g), via which (S2f, S2g), in a first shifting position, the idler gear (15) of the gear set (G6) of the sixth forward gear is coupled fixedly to the idler gear (16' , 18) of the transmission stage (GK*) or the gear set (G7) of the seventh forward gear which is assigned to the first input shaft (GE1) so as to rotate with it, is uncoupled in a neutral position, and is coupled fixedly to the relevant countershaft (VG2) so as to rotate with it in a second shifting position.

12. Manual gearbox according to one of Claims 1 to 11, **characterized in that** the first input shaft (GE1) can be connected via a friction clutch (K1) to the drive shaft (4) of the internal combustion engine (VM).

13. Manual gearbox according to one of Claims 1 to 11, **characterized in that** the first input shaft (GE1) can be connected via a claw coupling (K1') to the drive shaft (4) of the internal combustion engine (VM).

14. Manual gearbox according to one of Claims 1 to 11, **characterized in that** the first input shaft (GE1) is directly connected fixedly to the drive shaft (4) of the internal combustion engine (VM) so as to rotate with it.

15. Manual gearbox according to one of Claims 1 to 14, **characterized in that** the electric machine (EM) is arranged coaxially above the first input shaft (GE1), and the rotor (8) of the electric machine (EM) is directly connected fixedly to the second input shaft (GE2) so as to rotate with it.

16. Manual gearbox according to one of Claims 1 to 14, **characterized in that** the electric machine (EM') is arranged adjacently with respect to the first input shaft (GE1) in an axially parallel manner, and the rotor (8') of the electric machine (EM') is drive-connected via an input transmission stage (KE) with a transmission ratio (i_{KE}) of greater than one to the second input shaft (GE2) (i_{KE} > 1.0).

17. Manual gearbox according to one of Claims 1 to 14, **characterized in that** the electric machine (EM") is arranged coaxially above the first input shaft (GE1), and the rotor (8") of the electric machine (EM") is drive-connected to the second input shaft (GE2) via an input transmission stage (KE') which is configured as a planetary gear mechanism with a transmission ratio (i_{KE}' of greater than one (i_{KE}' > 1.0).

## Revendications

1. Boîte de vitesses d'un entraînement hybride pour un véhicule automobile, avec deux arbres d'entrée (GE1, GE2) et un arbre de sortie (GA) commun, le premier arbre d'entrée (GE1) pouvant être relié à l'arbre d'entraînement (4) d'un moteur à combustion interne (VM) et pouvant être amené en liaison d'entraînement avec l'arbre de sortie (GA) via un premier groupe de jeux de pignons de rapport (G1, G3, G5 ; G1, G3, G5, G7) connectables de façon sélective, le deuxième arbre d'entrée (GE2) étant en liaison d'entraînement avec le rotor (8, 8', 8'') d'une machine électrique (EM, EM', EM") pouvant être entraînée comme un moteur et un générateur et pouvant être amenée en liaison d'entraînement avec l'arbre de sortie (GA) via un deuxième groupe de jeux de pignons de rapport (G2, G4 ; G2, G4, G6) connectables de façon sélective et les deux arbres d'entrée (GE1, GE2) pouvant être amenés entre eux en liaison d'entraînement via un dispositif de couplage (7.1, 7.2, 7.3, 7.6, 7.7) connectable, le premier arbre d'entrée (GE1) étant disposé de façon centrale, le deuxième arbre d'entrée (GE2) étant réalisé sous la forme d'un arbre creux et étant disposé dans le plan coaxial au-dessus du premier arbre d'entrée (GE1), le dispositif de couplage (7.1, 7.2, 7.3, 7.6, 7.7) étant associé au deuxième arbre d'entrée (GE2) et étant disposé au niveau de l'extrémité de côté de boîte de vitesses (5) du deuxième arbre d'entrée (GE2), le dispositif de couplage (7.1, 7.2, 7.3, 7.6, 7.7) comprenant un étage de boîte de vitesses (GK, G4 ; GK*, G7) et un embrayage (S ; T, U ; X, Y) connectable.

2. Boîte de vitesses selon la revendication 1, **caractérisée en ce qu'**une conduite en marche arrière est possible en inversant le sens de rotation de la machine électrique (EM, EM', EM").

3. Boîte de vitesses selon la revendication 1 ou 2, **caractérisée en ce que** les jeux de pignons de rapport (G1 - G5) des rapports de marche avant sont disposés respectivement directement entre un des deux arbres d'entrée (GE1, GE2) et l'arbre de sortie (GA), le dispositif de couplage (7.1) comprenant un embrayage de changement de vitesse (S) servant au couplage direct de l'extrémité de côté de boîte de vitesses (5) du deuxième arbre d'entrée (GE2) au premier arbre d'entrée (GE1).

4. Boîte de vitesses selon la revendication 3, **caractérisée en ce que** la roue libre (10) ainsi que l'embrayage de rapport (D) associé du jeu de pignons de rapport (G1), associé au premier arbre d'entrée (GE1) et connexe dans le plan axial à l'extrémité de côté de boîte de vitesses (5) du deuxième arbre d'entrée (GE2), du premier rapport de marche avant sont disposés sur le premier arbre d'entrée (GE1), l'embrayage de changement de vitesse (S) du dispositif de couplage (7.1) étant regroupé en un groupe de changement de vitesse (S2a) commun avec l'embrayage de rapport (D) du jeu de pignons de rapport (G1) du premier rapport de marche avant, le premier arbre d'entrée (GE1) étant couplé, via ledit groupe, dans une première position de changement de vitesse, solidairement en rotation avec le deuxième arbre d'entrée (GE2), étant découplé dans une position neutre et étant couplé, dans une deuxième position de changement de vitesse, solidairement en rotation avec la roue libre du jeu de pignons de rapport (G1) du premier rapport de marche avant.

5. Boîte de vitesses selon la revendication 1 ou 2, **caractérisée en ce que** les jeux de pignons de rapport (G1 - G5) des rapports de marche avant sont respectivement disposés directement entre un des deux arbres d'entrée (GE1, GE2) et l'arbre de sortie (GA), et dans laquelle au moins la roue libre (10') et l'embrayage de rapport (D) associé du jeu de pignons de rapport (G1), associé au premier arbre d'entrée (GE1) et disposé dans le plan axial à côté de l'extrémité de côté de boîte de vitesses (5) du deuxième arbre d'entrée (GE2), du premier rapport de marche avant étant disposé sur l'arbre de sortie (GA), le dispositif de couplage (7.2) comprenant un étage de boîte de vitesses (GK) composé d'une roue libre (11) disposée de façon à pouvoir tourner sur l'arbre de sortie (GA) et d'une roue fixe (12) disposée solidairement en rotation au niveau de l'extrémité de côté de boîte de vitesses (5) du deuxième arbre de sortie (GE2) ainsi qu'un embrayage de changement de vitesse (T) servant à coupler la roue libre (10') du jeu de pignons de rapport (G1) du premier rapport de marche avant à la roue libre (11) de l'étage de boîte de vitesses (GK).

6. Boîte de vitesses selon la revendication 1 ou 2, **caractérisée en ce que** les jeux de pignons de rapport (G1 - G5) des rapports de marche avant sont respectivement directement disposés entre un des deux arbres d'entrée (GE1, GE2) et l'arbre de sortie (GA), au moins les roues libres (10', 13) et les embrayages de rapport (B, D) associés du jeu de pignons de rapport (G1), associé au premier arbre d'entrée (GE1) et disposé dans le plan axial à côté de l'extrémité de côté de boîte de vitesses (5) du deuxième arbre d'entrée (GE2), du premier rapport de marche avant ainsi que du jeu de pignons de rapport (G4), associé au deuxième arbre d'entrée (GE2) et disposé au niveau de l'extrémité de côté de boîte de vitesses (5) du deuxième arbre d'entrée (GE2), du quatrième rapport de marche avant sont disposés sur l'arbre de sortie (GA) et le dispositif de couplage (7.3) comprenant le jeu de pignons de rapport (G4) du quatrième rapport de marche avant et un embrayage de changement de vitesse (U) servant à coupler la roue libre (10') du jeu de pignons de rapport (G1) du premier rapport de marche avant avec la roue libre (13) du jeu de pignons de rapport (G4) du quatrième rapport de marche avant.

7. Boîte de vitesses selon la revendication 5 ou 6, **caractérisée en ce que** l'embrayage de changement de vitesse (T, U) du dispositif de couplage (7.2, 7.3) est regroupé en un groupe de changement de vitesse (S2b, S2c) commun avec l'embrayage de rapport (D) du jeu de pignons de rapport (G1) du premier rapport de marche avant, la roue libre (10') du jeu de pignons de rapport à l'intérieur de boîte de vitesses (G1) du premier rapport de marche avant étant couplée, via ledit groupe, dans une première position de changement de vitesse, solidairement en rotation, avec la roue libre (11, 13) de l'étage de boîte de vitesses (GK) et/ou du jeu de pignons de rapport (G4) du quatrième rapport de marche avant, étant découplée dans une position neutre et étant couplée, dans une deuxième position de changement de vitesse, solidairement en rotation avec l' arbre de sortie (GA).

8. Boîte de vitesses selon la revendication 1 ou 2, **caractérisée en ce que** les jeux de pignons de rapport (G1 - G7) des rapports de marche avant sont respectivement disposés entre un des deux arbres d'entrée (GE1, GE2) et un des deux arbres intermédiaires (VG1, VG2) placés en liaison d'entraînement avec l'arbre de sortie (GA) via respectivement une constante de sortie (AK1, AK2), au moins la roue libre (15) et l'embrayage de rapport (D) associé du jeu de pignons de rapport (G6), associé au deuxième arbre d'entrée (GE2) ainsi qu'à un (VG2) des deux arbres intermédiaires (VG1, VG2) et disposé au niveau de l'extrémité de côté de boîte de vitesses (5) du deuxième arbre d'entrée (GE2), du sixième rapport de marche avant étant disposés sur l'arbre intermédiaire (VG2) concerné, le dispositif de couplage (7.6) comprenant un étage de boîte de vitesses (GK*) composé d'une roue libre (16') disposée de façon à pouvoir tourner sur l'arbre intermédiaire (VG2) concerné et d'une roue fixe (17') disposée solidairement en rotation sur le premier arbre d'entrée (GE1) ainsi qu'un embrayage de changement de vitesse (X) servant à coupler la roue libre (15) du jeu de pignons de rapport (G6) du sixième rapport de marche avant à la roue libre (16') de l'étage de boîte de vitesses (GK*).

9. Boîte de vitesses selon la revendication 5 ou 8, **caractérisée en ce que** la démultiplication (i_{GK} ; i_{GK}*) de l'étage de boîte de vitesses (GK ; GK*) correspond à la démultiplication (i_{G1}; i_{G6}) du jeu de pignons de rapport (G1 ; G6) pouvant être couplé via l'embrayage de changement de vitesse (T ; X) du dispositif de couplage (7.2 ; 7.6) (i_{GK} = i_{G1} ; i_{GK}* = i_{G6})

10. Boîte de vitesses selon la revendication 1 ou 2, **caractérisée en ce que** les jeux de pignons de rapport (G1 - G7) des rapports de marche avant sont respectivement disposés entre un des deux arbres d'entrée (GE1, GE2) et un des deux arbres intermédiaires (VG1, VG2) respectivement placés en liaison d'entraînement avec l'arbre de sortie (GA) via une constante de sortie (AK1, AK2), au moins les roues libres (15, 18) et les embrayages de rapport (B, D) associés du jeu de pignons de rapport (G6), associé au deuxième arbre d'entrée (GE2) et à un (VG2) des deux arbres intermédiaires (VG1, VG2) et disposé au niveau de l'extrémité de côté de boîte de vitesses (5) du deuxième arbre d'entrée (GE2), du sixième rapport de marche avant, ainsi que du jeu de pignons de rapport (G7), associé au premier arbre d'entrée (GE1) et disposé dans le plan axial à côté de l'extrémité de côté de boîte de vitesses (5) du deuxième arbre d'entrée (GE2), du septième rapport de marche avant sont disposés sur l'arbre intermédiaire (VG2) concerné et le dispositif de couplage (7.7) comprenant le jeu de pignons de rapport (G7) du septième rapport de marche avant et un embrayage de changement de vitesse (Y) servant à coupler la roue libre (15) du jeu de pignons de rapport (G6) du sixième rapport de marche avant avec la roue libre (18) du jeu de pignons de rapport (G7) de l'intérieur de boîte de vitesses.

11. Boîte de vitesses selon l'une quelconque des revendications 8 à 10, **caractérisée en ce que** l'embrayage de changement de vitesse (X, Y) du dispositif de couplage (7.6, 7.7) est regroupé en un groupe de changement de vitesse (S2f, S2g) commun avec l'embrayage de rapport (D) du jeu de pignons de rapport (G6) du sixième rapport de marche avant, la roue libre (15) du jeu de pignons de rapport (G6) du sixième rapport de marche avant étant couplée, dans une première position de changement de vitesse, via ledit groupe (S2f, S2g), solidairement en rotation avec la roue libre (16', 18) de l'étage de boîte de vitesses (GK*) et/ou du jeu de pignons de rapport (G7), associé au premier arbre d'entrée (GE1), du septième rapport de marche avant, découplée dans une position neutre et couplée, dans une deuxième position de changement de vitesse, solidairement en rotation avec l'arbre intermédiaire (VG2) concerné.

12. Boîte de vitesses selon l'une quelconque des revendications 1 à 11, **caractérisée en ce que** le premier arbre d'entrée (GE1) pouvant être relié à l'arbre d'entraînement (4) du moteur à combustion interne (VM) via un embrayage à friction (K1).

13. Boîte de vitesses selon l'une quelconque des revendications 1 à 11, **caractérisée en ce que** le premier arbre d'entrée (GE1) peut être relié à l'arbre d'entraînement (4) du moteur à combustion interne (VM) via un embrayage à griffes (K1').

14. Boîte de vitesses selon l'une quelconque des revendications 1 à 11, **caractérisée en ce que** le premier arbre d'entrée (GE1) est directement relié solidairement en rotation à l'arbre d'entraînement (4) du moteur à combustion interne (VM).

15. Boîte de vitesses selon l'une quelconque des revendications 1 à 14, **caractérisée en ce que** la machine électrique (EM) est disposée dans le plan coaxial au-dessus du premier arbre d'entrée (GE1) et que le rotor (8) de la machine électrique (EM) est directement relié solidairement en rotation au deuxième arbre d'entrée (GE2).

16. Boîte de vitesses selon l'une quelconque des revendications 1 à 14, **caractérisée en ce que** la machine électrique (EM') est disposée parallèlement à l'axe à côté du premier arbre d'entrée (GE1) et que le rotor (8') de la machine électrique (EM') est en liaison d'entraînement, via un étage d'entrée de boîte de vitesses (KE), avec une démultiplication (i_{KE}) plus importante que celle se produisant avec le deuxième arbre d'entrée (GE2) (i_{KE} > 1,0).

17. Boîte de vitesses selon l'une quelconque des revendications 1 à 14, **caractérisée en ce que** la machine électrique (EM") est disposée dans le plan coaxial au-dessus du premier arbre d'entrée (GE1) et que le rotor (8") de la machine électrique (EM") est en liaison d'entraînement, via un étage d'entrée de boîte de vitesses (KE') réalisé sous la forme d'un engrenage planétaire, avec une démultiplication (i_{KE}') plus importante que celle se produisant avec le deuxième arbre d'entrée (GE2) (i_{KE}' > 1,0).
